# EUROPÄISCHE PATENTSCHRIFT

(11) **EP 2 928 938 B1**
(45) Veröffentlichungstag und Bekanntmachung des Hinweises auf die Patenterteilung: **16.11.2016**
(21) Anmeldenummer: 13801524.3
(22) Anmeldetag: 02.12.2013
(51) Int. Cl.: C08G 18/67, C08G 18/81, C08G 18/08, C09D 175/16

(54) **STRAHLUNGSHÄRTBARE WÄSSRIGE POLYURETHANDISPERSIONEN**
RADIATION-CURABLE AQUEOUS POLYURETHANE DISPERSIONS
DISPERSIONS DE POLYURÉTHANE DURCISSABLES PAR IRRADIATION

(30) Priorität: 06.12.2012 US 201261733943 P; 06.12.2012 EP 12195869
(43) Veröffentlichungstag der Anmeldung: 14.10.2015
(73) Patentinhaber: BASF SE, 67056 Ludwigshafen am Rhein (DE)
(72) Erfinder: SCHWALM, Reinhold, 67157 Wachenheim (DE); NEUMANN, Susanne, 67346 Speyer (DE); THüRY, Peter, 67069 Ludwigshafen (DE); BURKHARDT, Uwe, 67063 Ludwigshafen (DE); BERGER, Sebastian, Ann Arbor 48104 (US); ROLLER, Sebastian, 68167 Mannheim (DE)
(74) Vertreter: BASF IP Association
(86) Internationale Anmeldenummer: PCT/EP2013/075268
(87) Internationale Veröffentlichungsnummer: WO 2014/086724

(56) Entgegenhaltungen:
- EP-A1- 1 142 947
- EP-A1- 1 958 974
- US-A1- 2012 136 111

## Beschreibung

Die vorliegende Erfindung betrifft mit UV-Strahlung härtbare, wäßrige Polyurethandispersionen, ein Verfahren zu deren Herstellung und deren Verwendung. Strahlungshärtbare Polyurethane sind zur Beschichtung von Holzwerkstoffen, z.B. in der Möbelindustrie, weit verbreitet. Neben Anforderungen wie hoher Härte müssen Beschichtungen in der Möbelindustrie vor allem die Holzstruktur betonen, ein Effekt, der als "Anfeuerung" bezeichnet wird.

Wasserdispergierbare, strahlenhärtbare Polyurethane sind z.B. bekannt aus EP 753531, in der Urethanacrylate auf Basis von Polyesteracrylaten hergestellt werden, und EP 942022, in der Urethanacrylate auf Basis von acrylatgruppenhaltigen Präpolymeren hergestellt werden. Die dort beschriebenen Polyurethanacrylat-Dispersionen zeigen nur eine unzureichende Betonung der Holzstruktur auf.

Insbesondere die Beispiele gemäß der EP 753531 zeigen eine schlechte Anfeuerung, wie in der EP 1142947, dort Beispiel A als Vergleichsbeispiel nachgewiesen wird. Wässrige Polyurethan-Dispersionen mit guter Anfeuerung sind z.B. in EP 1142947 beschrieben. Dieser Effekt wird auf den Einbau eines besonderen Monomers (Hydroxypivalinsäure neopentylglykolester) zurückgeführt. Die dort beschriebenen Systeme zeigen zwar deutlich verbesserte Anfeuerungen (Note 2) gegenüber dem Stand der Technik, zeigen jedoch gegenüber dem als Referenz eingesetzten Polyesteracrylat Laromer® PE 55W (Note 0) noch Verbesserungsbedarf.

Aus der Internationalen Patentanmeldung WO 2012/171833 (Aktenzeichen PCT/EP2012/060644, Anmeldedatum 6. Juni 2012) sind in Wasser dispergierte Polyurethane bekannt, die durch ihren geringen mittleren Durchmesser von nicht mehr als 30 nm eine ausgeprägte Anfeuerung zeigen.

Nachteilig ist, daß diese Polyurethane nach dem Trocknen und vor der UV-Härtung eine deutliche Klebrigkeit zeigen.

Der vorliegenden Erfindung liegt die Aufgabe zugrunde, mit UV-Strahlung härtbare, in Wasser dispergierte Polyurethane zur Verfügung zu stellen, die auf Holzwerkstoffen gute anwendungstechnische Eigenschaften, insbesondere eine hohe Härte bei gleichzeitig guter Anfeuerung, zeigen. Nach dem Trocknen und vor der Härtung sollen diese eine verminderte Klebrigkeit zeigen. Zur Dispergierung der Polyurethane soll ferner auf gesundheitsschädliche Lösungsmittel, insbesondere N-Methylpyrrolidon (NMP), verzichtet werden.

Die Aufgabe wird gelöst durch Beschichtungsmassen, umfassend mindestens zwei strahlungshärtbare, in Wasser dispergierte Polyurethane (A) und (B), von denen Polyurethan (A) aufgebaut ist aus
(Aa) wenigstens einem aliphatischen Di- oder Polyisocyanat,
(Ab) wenigstens einer Verbindung mit mindestens einer gegenüber Isocyanatgruppen reaktiven Gruppe und mindestens einer radikalisch polymerisierbaren C=C-Doppelbindung,
(Ac) optional wenigstens einer Verbindung mit mindestens zwei gegenüber Isocyanatgruppen reaktiven Gruppen, die ausgewählt sind unter Hydroxyl-, Mercapto-, primären und/oder sekundären Aminogruppen,
(Ad) wenigstens einer Verbindung mit mindestens einer gegenüber Isocyanatgruppen reaktiven Gruppe und mindestens einer Säuregruppe,
(Ae) mindestens einer basischen Verbindung für eine Neutralisation oder Teilneutralisation der Säuregruppen der Verbindungen Ad),
(Af) optional wenigstens einer von Ab), Ad) und Ae) verschiedenen Verbindung, die nur eine gegenüber Isocyanatgruppen reaktive Gruppe aufweist,
(Ag) optional wenigstens einem von Aa) verschiedenen Di- oder Polyisocyanat,
   und das Polyurethan (B) aufgebaut ist aus
(Ba) wenigstens einem cycloaliphatischen oder aromatischen Di- oder Polyisocyanat,
(Bb) wenigstens einer Verbindung mit mindestens einer gegenüber Isocyanatgruppen reaktiven Gruppe und mindestens einer radikalisch polymerisierbaren C=C-Doppelbindung,
(Bc) optional wenigstens einer Verbindung mit mindestens zwei gegenüber Isocyanatgruppen reaktiven Gruppen, die ausgewählt sind unter Hydroxyl-, Mercapto-, primären und/oder sekundären Aminogruppen,
(Bd) wenigstens einer Verbindung mit mindestens einer gegenüber Isocyanatgruppen reaktiven Gruppe und mindestens einer Säuregruppe,
(Be) mindestens einer basischen Verbindung für eine Neutralisation oder Teilneutralisation der Säuregruppen der Verbindungen Bd),
(Bf) optional wenigstens einer von Bb), Bd) und Be) verschiedenen Verbindung, die nur eine gegenüber Isocyanatgruppen reaktive Gruppe aufweist,
(Bg) optional wenigstens einem von Ba) verschiedenen aliphatischen Di- oder Polyisocyanat,
(C) optional weiteren Zusatzstoffen, die ausgewählt sind unter Reaktivverdünnern, Photoinitiatoren und üblichen Lackzusatzstoffen,
(D) Wasser sowie
(E) optional mindestens ein Di- und/oder Polyamin,
wobei das Polyurethan (B) für sich allein nach Trocknung über einen Zeitraum von 16 bis 24, bevorzugt 24 Stunden bei einer Nassschichtdicke von 200 µm, einer Temperatur von 20 bis 24 °C und einer relativen Luftfeuchtigkeit von 40 bis 60% und vor UV-Härtung eine Pendeldämpfung gemäß DIN 53157 von mindestens 50 Schwingungen aufweist und wobei das Mischungsverhältnis von Polyurethan (A) und Polyurethan (B) so gewählt ist, daß deren Mischung nach Trocknung über einen Zeitraum von 16 bis 24, bevorzugt 24 Stunden bei einer Nassschichtdicke von 200 µm, einer Temperatur von 20 bis 24 °C und einer relativen Luftfeuchtigkeit von 40 bis 60% und vor UV-Härtung eine Pendeldämpfung gemäß DIN 53157 von mindestens 5, bevorzugt mindestens 20 Schwingungen aufweist.

In einer bevorzugten Ausführungsform weisen die erfindungsgemäßen Polyurethane (A) und (B) im Gemisch eine Doppelbindungsdichte von mindestens 1,5 mol/kg, bevorzugt mindestens 1,8, besonders bevorzugt mindestens 2,0, ganz besonders bevorzugt 2,2 mol/kg auf.

In den erfindungsgemäßen Dispersionen werden keine isocyanatgruppenhaltigen Verbindungen eingesetzt, bei denen die Isocyanatgruppen teilweise oder vollständig mit sogenannten Blockierungsmitteln umgesetzt wurden. Unter Blockierungsmitteln werden dabei Verbindungen verstanden, die Isocyanatgruppen in blockierte (verkappte bzw. geschützte) Isocyanatgruppen umwandeln, die dann unterhalb der sogenannten Deblockierungstemperatur nicht die üblichen Reaktionen einer freien Isocyanatgruppe zeigen. Solche erfindungsgemäß nicht eingesetzten Verbindungen mit blockierten Isocyanatgruppen kommen üblicherweise in Dual-Cure-Beschichtungsmitteln zur Anwendung, die über Isocyanatgruppenhärtung endgehärtet werden. Bevorzugt weisen die erfindungsgemäßen Polyurethandispersionen nach ihrer Herstellung im Wesentlichen keine freien Isocyanatgruppen mehr auf, d.h. in der Regel weniger als 1 Gew.-% NCO, bevorzugt weniger als 0,75, besonders bevorzugt weniger als 0,66 und ganz besonders bevorzugt weniger als 0,3 Gew.-% NCO (berechnet mit einem Molgewicht von 42 g/mol).

### Polyurethan (A)

### Komponente Aa)

Bei der Komponente Aa) handelt es sich um wenigstens ein, beispielsweise ein bis drei, bevorzugt ein bis zwei und besonders bevorzugt genau ein aliphatisches Di- oder Polyisocyanat.

Aliphatische Isocyanate sind solche, die ausschließlich Isocyanatgruppen aufweisen, die an solche Kohlenstoffatome gebunden sind, die Bestandteil gerader oder verzweigter, acyclischer Ketten sind, bevorzugt solche, die ausschließlich Isocyanatgruppen aufweisen, die an gerade oder verzweigte, acyclische Ketten gebunden sind und besonders bevorzugt solche, die ausschließlich an gerade oder verzweigte, acyclische Kohlenwasserstoffketten gebundene Isocyanatgruppen aufweisen.

Bei den aliphatischen Diisocyanaten oder Polyisocyanaten handelt es sich bevorzugt um Isocyanate mit 4 bis 20 C-Atomen. Beispiele für übliche Diisocyanate sind 1,4-Tetramethylendiisocyanat, 1,5-Pentamethylendiisocyanat, 1,6-Hexamethylendiisocyanat, 2-Methyl-1,5-düsocyanatopentan, 1,8-Octamethylendiisocyanat, 1,10-Decamethylendiisocyanat, 1,12-Dodecamethylendiisocyanat, 1,14-Tetradecamethylendiisocyanat, 2,2,4- und 2,4,4-Trimethylhexandiisocyanat, 1,3-Bis(1-isocyanato-1-methylethyl)benzol (m-TMXDI), sowie Derivate des Lysindiisocyanats. Es können Gemische der genannten Diisocyanate vorliegen.

Bevorzugt sind 1,6-Hexamethylendiisocyanat und 2,2,4- und 2,4,4-Trimethylhexandiisocyanatgemische, besonders bevorzugt ist 1,6-Hexamethylendiisocyanat.

Es können auch Gemische der genannten Diisocyanate vorliegen.

2,2,4- und 2,4,4-Trimethylhexandiisocyanat liegen beispielsweise als Gemisch vor im Verhältnis 1,5:1 bis 1:1,5, bevorzugt 1,2:1 - 1:1,2, besonders bevorzugt 1,1:1 - 1:1,1 und ganz besonders bevorzugt 1:1. Bei den Polyisocyanaten kann es sich um monomere Isocyanate mit mehr als zwei Isocyanatgruppen handeln oder um Oligomere der oben genanten Diisocyanate.

Ein Beispiel für ersteres sind Triisocyanatononan (4-Isocyanatomethyl-1, 8-octan-diisocyanat) oder 2'-lsocyanatoethyl-(2,6-diisocyanatohexanoat).

Bevorzugt handelt es sich bei den Polyisocyanaten um folgende Verbindungen:
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im Allgemeinen einen NCO-Gehalt von 10 bis 30 Gew.-%, insbesondere 15 bis 25 Gew.-% und eine mittlere NCO-Funktionalität von 2,6 bis 8.
   Die Isocyanuratgruppen aufweisenden Polyisocyanate können in geringerem Umfang auch Urethan- und/oder Allophanat-Gruppen enthalten, bevorzugt mit einem Gehalt gebundenen Alkohols von kleiner 2 % bezogen auf das Polyisocyanat.
2) Uretdiongruppen aufweisende Polyisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten. Die Uretdiongruppen aufweisenden Polyisocyanate werden häufig im Gemisch mit anderen Polyisocyanaten, insbesondere den unter 1) genannten, erhalten. Uretdiongruppen aufweisende Polyisocyanate weisen üblicherweise Funktionalitäten von 2 bis 3 auf.
   Dies umfasst auch Uretdion-/Isocyanurat-Gemische beliebiger Zusammensetzung, insbesondere mit einem Gehalt an monomerem Uretdion (Dimer) von 1-40%, insbesondere 3-15, insbesondere 5-10 %.
   Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den anderen Polyisocyanaten und diese anschließend zu Uretdiongruppen-haltigen Produkten umgesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanat-gruppen, insbesondere Tris-(6-isocyanatohexyl)-biuret oder dessen Gemische mit seinen höheren Homologen. Diese Biuretgruppen aufweisenden Polyisocyanate weisen im Allgemeinen einen NCO-Gehalt von 18 bis 24 Gew.-% und eine mittlere NCO-Funktionalität von 2,8 bis 6 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen erhältlich sind. Diese Urethan- und/oder Allophanat-gruppen aufweisenden Polyisocyanate haben im Allgemeinen einen NCO-Gehalt von 12 bis 24 Gew.-% und eine mittlere NCO-Funktionalität von 2,0 bis 4,5. Solche Urethanund/oder Allophanatgruppen aufweisenden Polyisocyanate können unkatalysiert oder bevorzugt in Gegenwart von Katalysatoren, wie beispielsweise Ammoniumcarboxylaten oder -hydroxiden, oder Allophanatisierungskatalysatoren, z.B. Wismut-, Kobalt-, Cäsium-, Zn-(II)- oder Zr-(IV)-Verbindungen, jeweils in Anwesenheit von ein-, zwei- oder mehrwertigen, bevorzugt einwertigen Alkoholen, hergestellt werden.
   Diese Urethan- und/oder Allophanatgruppen aufweisenden Polyisocyanate treten häufig in Mischformen mit den unter 1) genannten Polyisocyanaten auf.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind aus Diisocyanaten mittels spezieller Katalysatoren herstellbar.
7) Uretonimin-modifizierte Polyisocyanate.
8) Carbodiimid-modifizierte Polyisocyanate.
9) Hyperverzweigte Polyisocyanate, wie sie beispielsweise bekannt sind aus der DE-A1 10013186 oder DE-A1 10013187.
10) Polyurethan-Polyisocyanat-Präpolymere, aus Di- und/oder Polyisocyanaten mit Alkoholen.
11) Polyharnstoff-Polyisocyanat-Präpolymere.
12) Die Polyisocyanate 1)-11), bevorzugt 1), 3), 4) und 6) können nach deren Herstellung in Biuretgruppen- oder Urethan-/Allophanat-Gruppen aufweisende Polyisocyanate mit aromatisch, cycloaliphatisch oder aliphatisch gebundenen, bevorzugt (cyclo)aliphatisch gebundenen Isocyanatgruppen, überführt werden. Die Bildung von Biuretgruppen erfolgt beispielsweise durch Zugabe von Wasser oder Umsetzung mit Aminen. Die Bildung von Urethan- und/oder Allophanatgruppen erfolgt durch Umsetzung mit ein-, zwei- oder mehrwertigen, bevorzugt einwertigen Alkoholen, optional in Gegenwart von geeigneten Katalysatoren. Diese Biuret- oder Urethan-/Allophanatgruppen aufweisenden Polyisocyanate weisen im Allgemeinen einen NCO-Gehalt von 10 bis 25 Gew.-% und eine mittlere NCO-Funktionalität von 3bis 8 auf.
13) Hydrophil modifizierte Polyisocyanate, d.h. Polyisocyanate, die neben den unter 1-12 beschriebenen Gruppen solche enthalten, die formal durch Addition von Molekülen mit NCO-reaktiven Gruppen und hydrophilierenden Gruppen an die Isocyanatgruppen obiger Moleküle entstehen. Bei letzteren handelt es sich um nichtionische Gruppen wie Alkyl-Polyethylenoxid und/oder ionische, welche von Phosphorsäure, Phosphonsäure, Schwefelsäure oder Sulfonsäure, bzw. ihren Salzen abgeleitet sind.
14) Modifizierte Polyisocyanate für Dual Cure Anwendungen, d.h. Polyisocyanate, die neben den unter 1-11 beschriebenen Gruppen solche enthalten, die formal durch Addition von Molekülen mit NCO-reaktiven Gruppen und durch UV- oder aktinische Strahlung vernetzbare Gruppen an die Isocyanatgruppen obiger Moleküle entstehen. Bei diesen Molekülen handelt es sich beispielsweise um Hydroxyalkyl(meth)acrylate und andere Hydroxy-Vinylverbindungen.

Bevorzugte Polyisocyanate sind Isocyanurat-, Biuret-, Uretdion-, Allophanat-, Iminooxadiazintrion- und/oder Carbodiimidgruppen haltige Oligomere, die durch Oligomerisation mindestens eines, bevorzugt genau eines oben genanten Diisocyanate erhältlich sind, besonders bevorzugt durch Umsetzung von 1,6-Hexamethylendiisocyanat.

Besonders bevorzugte Polyisocyanate sind Isocyanurat-, Uretdion- und/oder Allophanatgruppen haltige Oligomere, besonders bevorzugt Isocyanurat- und/oder Allophanatgruppen haltige Oligomere und in einer ganz besonders bevorzugten Ausführungsform handelt es sich bei der Verbindung Aa) um ein allophanatgruppenhaltiges Oligomer auf Basis 1,6-Hexamethylendiisocyanat, bei dem 1,6-Hexamethylendiisocyanat mit zumindest einem Teil der Verbindung Ab) zu einem allophanatgruppenhaltigen Oligomer umgesetzt wird.

Diese Umsetzung ergibt eine Verbindung mit mindestens zwei freien Isocyanatgruppen, mindestens einer Allophanatgruppe und mindestens einer, durch ihre gegenüber Isocyanatgruppen reaktive Gruppe an die Allophanatgruppe gebundene, radikalisch polymerisierbare C=C-Doppelbindung.

Eine derartige Komponente Aa) enthält einen Gehalt an Allophanatgruppen (berechnet als C₂N₂HO₃ = 101 g/mol) von 1 bis 35 Gew.-%, bevorzugt von 5 bis 30 Gew.-%, besonders bevorzugt von 10 bis 35 Gew.-%. Die erfindungsgemäßen Polyurethane aus den Aufbaukomponenten Aa) bis Ad) sowie gegebenenfalls Af) und Ag) enthalten 1 bis 30 Gew.-%, bevorzugt von 1 bis 25 Gew.-%, besonders bevorzugt von 2 bis 20 Gew.-% Allophanatgruppen. Weiterhin enthält die erfindungsgemäß eingesetzte Komponente Aa) weniger als 5 Gew.-% Uretdion.

Bevorzugt sind Verbindungen der folgenden Formel 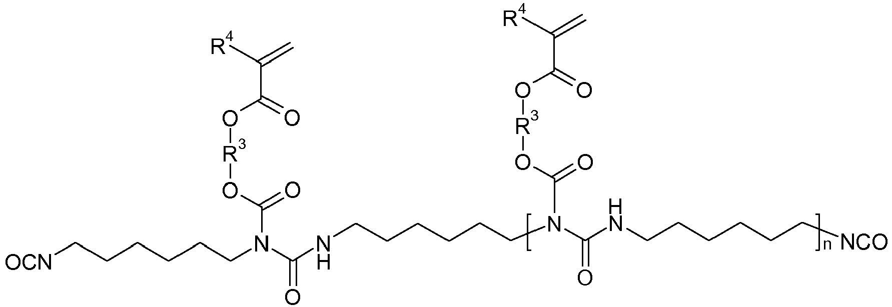 worin
R³ einen zweiwertigen aliphatischen oder cycloaliphatischen, bevorzugt aliphatischen Rest, bevorzugt Kohlenwasserstoffrest, der 2 bis 12, bevorzugt 2 bis 8, besonders bevorzugt 2 bis 4 Kohlenstoffatome aufweist,
R⁴ Wasserstoff oder Methyl, bevorzugt Wasserstoff, ist und
n im statistischen Mittel 0 oder eine positive Zahl, bevorzugt Werte von 0 bis 5, besonders bevorzugt 0,5 bis 3 und ganz besonders bevorzugt 1 bis 2 annehmen kann.

Beispiele für R³ sind 1,2-Ethylen, 1,1-Dimethyl-1,2-ethylen, 1,2-Propylen, 1,3-Propylen, 2-Methyl-1,3-propylen, 2-Ethyl-1,3-propylen, 2-Butyl-2-ethyl-1,3-propylen, 2,2-Dimethyl-1,3-propylen, 1,2-Butylen, 1,3-Butylen, 1,4-Butylen, 1,5-Pentylen, 1,6-Hexylen, 2-Ethyl-1,3-hexylen, 1,8-Octylen, 2,4-Diethyl-1,3-octylen oder 1,10-Decylen, bevorzugt 1,2-Ethylen, 1,2-Propylen, 1,3-Propylen oder 1,4-Butylen, besonders bevorzugt 1,2-Ethylen oder 1,2-Propylen und ganz besonders bevorzugt 1,2-Ethylen.

Bevorzugt weist diese Komponente einen NCO-Gehalt von 10 bis 18, bevorzugt 12 bis 16 und besonders bevorzugt 13 bis 16 Gew% und ein mittleres Molekulargewicht von 600 bis 1200, bevorzugt 700 bis 1000 und besonders bevorzugt von 700 bis 900 g/mol auf.

Deartige Verbindungen sind beispielsweise unter dem Handelsnamen Laromer® LR 9000 von der BASF SE, Ludwigshafen, kommerziell erhältlich.

Die Herstellung solcher Verbindungen ist bekannt aus WO 00/39183 A1, dort besonders Beispiel 1.1. und Produkte 1 bis 7 aus Tabelle 1.

### Komponente Ab)

Bei der Komponente Ab) handelt es sich um wenigstens eine, bevorzugt ein bis drei, besonders bevorzugt ein oder zwei und ganz besonders bevorzugt genau eine Verbindung mit mindestens einer, beispielsweise ein oder zwei, bevorzugt genau einer gegenüber Isocyanatgruppen reaktiven Gruppe und mindestens einer, beispielsweise ein bis drei, bevorzugt ein oder zwei und ganz besonders bevorzugt genau einer radikalisch polymerisierbaren C=C-Doppelbindung.

Radikalisch polymerisierbare C=C-Doppelbindungen sind Vinylether-, Acrylat- oder Methacrylatgruppen, bevorzugt Acrylat- oder Methacrylatgruppen, und besonders bevorzugt Acrylatgruppen.

Bevorzugte Verbindungen der Komponenten Ab) sind z. B. die Ester zwei- oder mehrwertiger Alkohole mit α,β-ethylenisch ungesättigen Mono- und/oder Dicarbonsäuren und deren Anhydriden, bei denen mindestens eine Hydroxygruppe unumgesetzt bleibt.

Als α,β-ethylenisch ungesättigte Mono- und/oder Dicarbonsäuren und deren Anhydride können z. B. Acrylsäure, Methacrylsäure, Fumarsäure, Maleinsäure, Maleinsäureanhydrid, Crotonsäure, Itaconsäure, etc. eingesetzt werden. Bevorzugt werden Acrylsäure und Methacrylsäure, besonders bevorzugt Acrylsäure eingesetzt.

Geeignete zwei- oder mehrwertige Alkohole sind z. B. Diole wie Ethylenglykol, 1,2-Propandiol, 1,3-Propandiol, 1,1-Dimethylethan-1,2-diol, 2-Butyl-2-ethyl-1,3-Propandiol, 2-Ethyl-1,3-Propandiol, 2-Methyl-1,3-Propandiol, Neopentylglykol, Hydroxypivalinsäureneopentylglykolester, 1,2-, 1,3- oder 1,4-Butandiol, 1,6-Hexandiol, 1,10-Dekandiol, Bis-(4-hydroxycyclo-hexan)isopropyliden, Tetramethylcyclobutandiol, 1,2-, 1,3- oder 1,4-Cyclohexandiol, Cyclooctandiol, Norbornandiol, Pinandiol, Decalindiol, 2-Ethyl-1,3-Hexandiol, 2,4-Di-ethyl-oktan-1,3-diol, Hydrochinon, Bisphenol A, Bisphenol F, Bisphenol B, Bisphenol S, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Tricyclodecandimethanol.

Geeignete Triole und Polyole weisen z. B. 3 bis 25, bevorzugt 3 bis 18 Kohlenstoffatome auf. Dazu zählen z. B. Trimethylolbutan, Trimethylolpropan, Trimethylolethan, Pentaerythrit, Glycerin, Ditrimethylolpropan, Dipentaerythrit, Ditrimethylolpropan, Sorbit, Mannit, Diglycerol, Threit, Erythrit, Adonit (Ribit), Arabit (Lyxit), Xylit, Dulcit (Galactit), Maltit oder Isomalt.

Vorzugsweise sind die Verbindungen der Komponente Ab) ausgewählt unter 2-Hydroxyethylacrylat, 2-Hydroxyethylmethacrylat, 2-Hydroxypropylacrylat, 2-Hydroxypropyl-methacrylat, 3-Hydroxybutylacrylat, 3-Hydroxybutylmethacrylat, 4-Hydroxybutylacrylat, 4-Hydroxybutylmethacrylat, 6-Hydroxyhexylacrylat, 6-Hydroxyhexylmethacrylat, 3-Hydroxy-2-ethylhexylacrylat, 3-Hydroxy-2-ethylhexylmethacrylat, Trimethylolpropanmono-oder -diacrylat, Pentaerythritdi- oder -triacrylat und Mischungen davon.

Besonders bevorzugt ist die Verbindung Ab) ausgewählt aus der Gruppe bestehend aus 2-Hydroxyethylacrylat, 2-Hydroxyethylmethacrylat, 2-Hydroxypropylacrylat, 2-Hydroxy-propyl-methacrylat, 4-Hydroxybutylacrylat und Pentaerythrittriacrylat, ganz besonders bevorzugt ausgewählt aus der Gruppe bestehend aus 2-Hydroxyethylacrylat, 2-Hydro-xyethylmethacrylat, 2-Hydroxypropylacrylat und 2-Hydroxypropyl-methacrylat und insbesondere handelt es sich um 2-Hydroxyethylacrylat oder 2-Hydroxyethylmethacrylat.

### Komponente Ac)

Bei der optionalen Komponente Ac) handelt es sich um wenigstens eine Verbindung mit mindestens zwei, beispielsweise 2 bis 4, bevorzugt 2 bis 3 und besonders bevorzugt genau 2 gegenüber Isocyanatgruppen reaktiven Gruppen, die ausgewählt sind unter Hydroxyl-, Mercapto-, primären und/oder sekundären Aminogruppen, bevorzugt ausgewählt aus der Gruppe bestehend aus Hydroxy- und primären Aminogruppen, besonders bevorzugt handelt es sich um Hydroxygruppen.

Bei den Verbindungen Ac) handelt es sich um niedermolekulare Verbindungen mit einem Molgewicht unter 500 g/mol, bevorzugt unter 400 g/mol, besonders bevorzugt unter 250 g/mol.

Die niedermolekularen Alkohole Ac) können aliphatisch oder cycloaliphatisch, bevorzugt aliphatisch sein.

Die Hydroxygruppen können bevorzugt sekundär oder primär, bevorzugt primär sein.

Besonders bevorzugt sind Alkohole mit 2 bis 20 Kohlenstoffatomen. Bevorzugt sind insbesondere hydrolysestabile kurzkettige Diole mit 4 bis 20, bevorzugt 6 bis 12 Kohlenstoffatomen. Ganz besonders bevorzugt handelt es sich bei den Verbindungen Ac) um Alkandiole.

Beispiele für Verbindungen Ac) sind Ethylenglykol, 1,2-Propandiol, 1,3-Propandiol, 1,1-Dimethylethan-1,2-diol, 2-Butyl-2-ethyl-1,3-Propandiol, 2-Ethyl-1,3-Propandiol, 2-Methyl-1,3-Propandiol, Neopentylglykol, Hydroxypivalinsäureneopentylglykolester, 1,2-, 1,3- oder 1,4-Butandiol, 1,6-Hexandiol, 1,10-Dekandiol, Bis-(4-hydroxycyclohexan)isopropyliden, Tetramethylcyclobutandiol, 1,2-, 1,3- oder 1,4-Cyclohexandiol, Cyclooctandiol, Norbornandiol, Pinandiol, Decalindiol, 2-Ethyl-1,3-Hexandiol, 2,4-Diethyl-oktan-1,3-diol, Hydrochinon, Bisphenol A, Bisphenol F, Bisphenol B, Bisphenol S, 2,2-Bis(4-hydroxycyclohexyl)propan, 1,1-, 1,2-, 1,3- und 1,4-Cyclohexandimethanol, 1,2-, 1,3- oder 1,4-Cyclohexandiol.

Bevorzugt sind Ethylenglykol, 1,2-Propandiol, 1,3-Propandiol, Neopentylglykol, 1,4-Butandiol, 1,6-Hexandiol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, besonders bevorzugt sind Ethylenglykol, 1,2-Propandiol, 1,3-Propandiol, Neopentylglykol, 1,4-Butandiol oder 1,6-Hexandiol.

Es werden erfindungsgemäß keine wesentlichen Mengen höhermolekularer Di- oder Polyole mit einem Molgewicht oberhalb von 500 g/mol eingesetzt.

Mit "keine wesentlichen Mengen" ist dabei gemeint, daß der Anteil der OH-Gruppen der höhermolekularen Di- oder Polyole an den insgesamt eingesetzten OH-Gruppen aus den Verbindungen Ab), Ac), Ad) und Af) nicht mehr als 20 mol%, bevorzugt nicht mehr als 15 mol%, besonders bevorzugt nicht mehr als 10, ganz besonders bevorzugt nicht mehr als 5 und insbesondere 0 mol% beträgt.

Die zuvor genannten Komponenten Ac) können einzeln oder als Gemische eingesetzt werden.

### Komponente Ad)

Komponente Ad) ist wenigstens eine, bevorzugt genau eine Verbindung mit mindestens einer, beispielsweise ein bis 3, bevorzugt ein oder 2, besonders bevorzugt genau zwei gegenüber Isocyanatgruppen reaktiven Gruppe und mindestens einer, bevorzugt genau einer Säuregruppe.

Vorzugsweise sind die Säuregruppen der Verbindungen der Komponente Ad) ausgewählt unter Carbonsäuregruppen, Sulfonsäuregruppen, Phosphonsäuregruppen und Phosphorsäuregruppen. Bevorzugt sind Carbonsäure- und Sulfonsäuregruppen, besonders bevorzugt sind Carbonsäuregruppen.

Als Verbindungen Ad) mit mindestens einer gegenüber Isocyanat reaktiven Gruppe sowie mindestens einer Carbonsäure- oder Sulfonsäuregruppe kommen insbesondere aliphatische Monomercapto-, Monohydroxy- und Monoamino- und Iminocarbonsäuren und entsprechende Sulfonsäuren in Frage wie Mercaptoessigsäure (Thioglykolsäure), Mercaptopropionsäure, Mercaptobernsteinsäure, Hydroxyessigsäure, Hydroxypropionsäure (Milchsäure), Hydroxybernsteinsäure, Hydroxypivalinsäure, Dimethylolpropionsäure, Dimethylolbuttersäure, Hydroxydecansäure, Hydroxydodecansäure, 12-Hydroxystearinsäure, N-(2'-Aminoethyl)-3-aminopropionsäure, Hydroxyethansulfonsäure, Hydroxypropansulfonsäure, Mercaptoethansulfonsäure, Mercaptopropansulfonsäure, Aminoethansulfonsäure, Aminopropansulfonsäure, Glycin (Aminoessigsäure), N-Cyclohexylaminoethansulfonsäure, N-Cyclohexylaminopropansulfonsäure, oder Iminodiessigsäure.

Bevorzugt sind Dimethylolpropionsäure und Dimethylolbuttersäure, besonders bevorzugt ist Dimethylolpropionsäure.

### Komponente Ae)

Komponente Ae) ist mindestens eine basischen Verbindung für eine Neutralisation oder Teilneutralisation der Säuregruppen der Verbindungen Ad).

Als basische Verbindungen Ae) für eine Neutralisation oder Teilneutralisation der Säuregruppen der Verbindungen Ad) kommen anorganische und organische Basen wie Alkali- und Erdalkalihydroxide, -oxide, -carbonate, -hydrogencarbonate sowie Ammoniak oder primäre, sekundäre oder tert. Amine in Betracht. Bevorzugt ist die Neutralisation oder Teilneutralisation mit Aminen wie mit Ethanolamin oder Diethanolamin und insbesondere mit tert. Aminen, wie Triethylamin, Triethanolamin, Dimethylethanolamin oder Diethylethanolamin. Die Mengen an eingeführten chemisch gebundenen Säuregruppen und das Ausmaß der Neutralisation der Säuregruppen (das meist bei 40 bis 100 % der Äquivalenzbasis beträgt) soll vorzugsweise hinreichend sein, um eine Dispergierung der Polyurethane in einem wässrigen Medium sicherzustellen, was dem Fachmann geläufig ist.

### Komponente Af)

In den erfindungsgemäßen Dispersionen kann als Komponente Af) wenigstens eine weitere Verbindung mit einer gegenüber Isocyanatgruppen reaktiven Gruppe eingesetzt werden. Bei dieser Gruppe kann es sich um eine Hydroxyl-, Mercapto-, oder eine primäre oder sekundäre Aminogruppe handeln. Geeignete Verbindungen Af) sind die üblichen, dem Fachmann bekannten Verbindungen, die als sogenannte Abstopper zur Herabsetzung der Zahl reaktiver freier Isocyanatgruppen bzw. zur Modifizierung der Polyurethaneigenschaften üblicherweise bei der Polyurethanherstellung eingesetzt werden. Dazu zählen z. B. monofunktionelle Alkohole, wie Methanol, Ethanol, n-Propanol, Isopropanol, n-Butanol etc. Geeignete Komponenten Af) sind auch Amine mit einer primären oder sekundären Aminogruppe, wie z. B. Methylamin, Ethylamin, n-Propylamin, Diisopropylamin, Dimethylamin, Diethylamin, Di-n-propylamin, Diisopropylamin etc.

### Komponente Ag)

In den erfindungsgemäßen Dispersionen kann als optionale Komponenten Ag) in untergeordneten Mengen wenigstens ein von den Verbindungen der Komponenten Aa) verschiedenes Polyisocyanat eingesetzt werden. Erfindungsgemäß werden als Komponenten Ag) keine Polyisocyanate eingesetzt, bei denen die Isocyanatgruppen mit einem Blockierungsmittel umgesetzt wurden.

Bevorzugte Verbindungen Ag) sind Polyisocyanate mit einer NCO-Funktionalität von 2 bis 4,5, besonders bevorzugt 2 bis 3,5. Bevorzugt werden als Komponente Ag) aliphatische, cycloaliphatische und araliphatische Diisocyanate eingesetzt. Dies können beispielsweise die oben unter Aa) aufgeführten Diisocyanate sein, sind jedoch von der Verbindung Aa) verschieden. Bevorzugt sind Verbindungen Ag), die neben 2 oder mehreren Isocyanatgruppen noch eine Gruppe, ausgewählt aus der Gruppe der Urethan-, Harnstoff-, Biuret-, Allophanat-, Carbodiimid-, Uretonimin-, Uretdion- und Isocyanuratgruppen aufweisen.

Bevorzugt handelt es sich bei der Verbindung Ag) um cycloaliphatische oder aromatische, bevorzugt cycloaliphatische Di- und Polyisocyanate.

Cycloaliphatische Isocyanate sind solche, die mindestens eine Isocyanatgruppe aufweisen, die an ein Kohlenstoffatom gebunden ist, das Bestandteil eines vollständig gesättigten Ringsystems ist, bevorzugt solche, die mindestens eine Isocyanatgruppe aufweisen, die an ein Kohlenstoffatom gebunden ist, das Bestandteil eines nichtaromatischen Carbocyclus ist.

Aromatische Isocyanate sind solche, die mindestens eine Isocyanatgruppe aufweisen, die an ein Kohlenstoffatom gebunden ist, das Bestandteil eines aromatischen Ringsystems ist.

Beispiele für cycloaliphatische Diisocyanate sind 1,4-, 1,3- oder 1,2-Diisocyanatocyclohexan, 4,4'- oder 2,4'-Di(isocyanatocyclohexyl)methan, Isophorondiisocyanat, 1,3- oder 1,4-Bis-(isocyanatomethyl)cyclohexan, 2,4-, und 2,6-Diisocyanato-1-methylcyclohexan. Beispiele für aromatische Diisocyanate sind 2,4- oder 2,6-Toluylen-diisocyanat, m- oder p-Xylylendiisocyanat, 2,4'- oder 4,4'-Diisocyanatodiphenylmethan, 1,3- oder 1,4-Phenylendiisocyanat, 1-Chlor-2,4-phenylendüsocyanat, 1,5-Naphthylendiisocyanat, Diphenylen-4,4'-diisocyanat, 4,4'-Diisocyanato-3,3'-dimethyldiphenyldi-isocyanat, 3-Methyldiphenylmethan-4,4'-diisocyanat und Diphenylether-4,4'-diisocyanat. Es können Gemische der genannten Diisocyanate vorliegen.

Bevorzugt werden als Komponente Ag) Isophorondiisocyanat, 1,3- und 1,4-Bis(isocyanatomethyl)cyclohexan, deren Isocyanurate, Biurete und Mischungen davon eingesetzt.

Es stellt eine bevorzugte Ausführungsform der vorliegenden Erfindung dar, keine oder keine wesentlichen Mengen der Komponente Ag) einzusetzen, bevorzugt keine Komponente Ag) einzusetzen.

Mit "keine wesentlichen Mengen" ist dabei gemeint, daß der Anteil der NCO-Gruppen der Komponente Ag) an den insgesamt eingesetzten NCO-Gruppen aus den Verbindungen Aa) und Ag) nicht mehr als 20 mol%, bevorzugt nicht mehr als 15 mol%, besonders bevorzugt nicht mehr als 10, ganz besonders bevorzugt nicht mehr als 5 und insbesondere 0 mol% beträgt.

In einer bevorzugten Ausführungsform weist das Polyurethan (A) nach Trocknung und vor Härtung eine Glasübergangstemperatur Tg (extrapolierte Onset Temperatur, T_{eig}) mit der DSC-Methode (Differential Scanning Calorimetry) gemäß ASTM 3418/82 mit einer Aufheizrate von 10 °C/min bestimmt von weniger als 10 und bevorzugt nicht mehr als 0 und besonders bevorzugt nicht mehr als -10 °C auf.

### Polyurethan (B)

Das in den erfindungsgemäßen Beschichtungsmassen enthaltene Polyurethan (B) ist wie folgt aus den Aufbaukomponenten Ba) bis Bg) aufgebaut:

In den Polyurethan (B) handelt es sich bei der Isocyanatkomponenten um mindestens ein, bevorzugt ein bis drei, besonders bevorzugt ein oder zwei und ganz besonders bevorzugt genau ein cycloaliphatisches oder aromatisches, bevorzugt cycloaliphatisches Di- oder Polyisocyanat.
Es werden als Komponenten Ba) keine Polyisocyanate eingesetzt, bei denen die Isocyanatgruppen mit einem Blockierungsmittel umgesetzt wurden.

Bevorzugte Verbindungen Ba) sind Polyisocyanate mit einer NCO-Funktionalität von 2 bis 4,5, besonders bevorzugt 2 bis 3,5. In einer bevorzugten Ausführungsform werden als Komponente Ba) aliphatische, cycloaliphatische und araliphatische, bevorzugt cycloaliphatische Diisocyanate eingesetzt.
In einer weiteren bevorzugten Ausführungsform sind die Verbindungen Ba), um solche, die neben 2 oder mehreren Isocyanatgruppen noch eine Gruppe, ausgewählt aus der Gruppe der Urethan-, Harnstoff-, Biuret-, Allophanat-, Carbodiimid-, Uretonimin-, Uretdion- und Isocyanuratgruppen aufweisen.

Bevorzugt handelt es sich bei der Verbindung Ba) um cycloaliphatische oder aromatische, bevorzugt cycloaliphatische Di- und Polyisocyanate.

Cycloaliphatische Isocyanate sind solche, die mindestens eine Isocyanatgruppe aufweisen, die an ein Kohlenstoffatom gebunden ist, das Bestandteil eines vollständig gesättigten Ringsystems ist, bevorzugt solche, die mindestens eine Isocyanatgruppe aufweisen, die an ein Kohlenstoffatom gebunden ist, das Bestandteil eines nichtaromatischen Carbocyclus ist.

Aromatische Isocyanate sind solche, die mindestens eine Isocyanatgruppe aufweisen, die an ein Kohlenstoffatom gebunden ist, das Bestandteil eines aromatischen Ringsystems ist.

Beispiele für cycloaliphatische Diisocyanate sind 1,4-, 1,3- oder 1,2-Diisocyanatocyclohexan, 4,4'- oder 2,4'-Di(isocyanatocyclohexyl)methan, Isophorondiisocyanat, 1,3- oder 1,4-Bis-(isocyanatomethyl)cyclohexan, 2,4-, und 2,6-Diisocyanato-1-methylcyclohexan. Beispiele für aromatische Diisocyanate sind 2,4- oder 2,6-Toluylen-diisocyanat, m- oder p-Xylylendiisocyanat, 2,4'- oder 4,4'-Diisocyanatodiphenylmethan, 1,3- oder 1,4-Phenylendiisocyanat, 1-Chlor-2,4-phenylendiisocyanat, 1,5-Naphthylendi-isocyanat, Diphenylen-4,4'-diisocyanat, 4,4'-Diisocyanato-3,3'-dimethyldiphenyldi-isocyanat, 3-Methyldiphenylmethan-4,4'-diisocyanat und Diphenylether-4,4'-diisocyanat. Es können Gemische der genannten Diisocyanate vorliegen.

Bevorzugt werden als Komponente Ba) Isophorondiisocyanat, 4,4'- oder 2,4'-Di(isocyanatocyclohexyl)methan, deren Isocyanurate, Biurete und Mischungen davon eingesetzt.

Besonders bevorzugt werden als Komponente Ba) Isophorondiisocyanat, 4,4'- oder 2,4'-Di(isocyanatocyclohexyl)methan oder deren Isocyanurate eingesetzt.

Ganz besonders bevorzugt sind als Komponente Ba) Isophorondiisocyanat und ein Isocyanurat auf Basis Isophorondiisocyanat, insbesondere ein Isocyanurat auf Basis Isophorondiisocyanat.

Bei der Komponente Bb) kann es sich prinzipiell um die gleichen Verbindungen handeln, wie sie oben unter Ab) beschrieben sind, sind jedoch von der für das Polyurethan (A) eingesetzten Komponente Ab) unabhängig.

Vorzugsweise sind die Verbindungen der Komponente Bb) ausgewählt unter 2-Hydroxyethylacrylat, 2-Hydroxyethylmethacrylat, 2-Hydroxypropylacrylat, 2-Hydroxypropyl-methacrylat, 3-Hydroxybutylacrylat, 3-Hydroxybutylmethacrylat, 4-Hydroxybutylacrylat, 4-Hydroxybutylmethacrylat, 6-Hydroxyhexylacrylat, 6-Hydroxyhexylmethacrylat, 3-Hydroxy-2-ethylhexylacrylat, 3-Hydroxy-2-ethylhexylmethacrylat, Trimethylolpropanmono-oder -diacrylat, Pentaerythritdi- oder -triacrylat und Mischungen davon.

Besonders bevorzugt ist die Verbindung Bb) ausgewählt aus der Gruppe bestehend aus 2-Hydroxyethylacrylat, 2-Hydroxyethylmethacrylat, 2-Hydroxypropylacrylat, 2-Hydroxy-propyl-methacrylat, 4-Hydroxybutylacrylat und Pentaerythrittriacrylat, ganz besonders bevorzugt ausgewählt aus der Gruppe bestehend aus 2-Hydroxyethylacrylat, 2-Hydro-xyethylmethacrylat, 2-Hydroxypropylacrylat und 2-Hydroxypropyl-methacrylat und insbesondere handelt es sich um 2-Hydroxyethylacrylat oder 2-Hydroxyethylmethacrylat.

Bei der Komponente Bc) kann es sich prinzipiell um die gleichen Verbindungen handeln, wie sie oben unter Ac) beschrieben sind, sind jedoch von der für das Polyurethan (A) eingesetzten Komponente Ac) unabhängig.

In einer bevorzugten Ausführungsform handelt es sich bei der Komponente Bc) um mindestens ein cycloaliphatisches Diol und/oder ein aliphatisches Diol, bei dem die beiden Hydroxygruppen durch nicht mehr als vier Kohlenstoffatome voneinander getrennt sind, d.h. es handelt sich um eine aliphatisches 1,2-, 1,3- oder 1,4-Diol.

Unter einem cycloaliphatischen Diol wird dabei ein Diol verstanden, das mindestens ein vollständig gesättigtes Ringsystem aufweist, bevorzugt ein Diol, in dem mindestens eine, bevorzugt beide Hydroxygruppen an ein vollständig gesättigtes Ringsystem gebunden sind.

Aliphatische Diole sind solche Diole, die ausschließlich gerade oder verzweigte, acyclische Ketten aufweisen.

Besonders bevorzugte Verbindungen Bc) sind Ethylenglykol, 1,2-Propandiol, 1,3-Propandiol, 1,1-Dimethylethan-1,2-diol, 2-Butyl-2-ethyl-1,3-Propandiol, 2-Ethyl-1,3-Propandiol, 2-Methyl-1,3-Propandiol, Neopentylglykol, 1,2-, 1,3- oder 1,4-Butandiol, Bis-(4-hydroxycyclohexan)isopropyliden, Tetramethylcyclobutandiol, 1,2-, 1,3- oder 1,4-Cyclohexandiol, Cyclooctandiol, Norbornandiol, Pinandiol, Decalindiol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol.

Ganz besonders bevorzugt sind 2,2-Bis(4-hydroxycyclohexyl)propan, 1,1-, 1,2-, 1,3und 1,4-Cyclohexandimethanol.

Es werden bevorzugt keine wesentlichen Mengen höhermolekularer Di- oder Polyole mit einem Molgewicht oberhalb von 500 g/mol eingesetzt.

Mit "keine wesentlichen Mengen" ist dabei gemeint, daß der Anteil der OH-Gruppen der höhermolekularen Di- oder Polyole an den insgesamt eingesetzten OH-Gruppen aus den Verbindungen Bb), Bc), Bd) und Bf) nicht mehr als 20 mol%, bevorzugt nicht mehr als 15 mol%, besonders bevorzugt nicht mehr als 10, ganz besonders bevorzugt nicht mehr als 5 und insbesondere 0 mol% beträgt.

Die zuvor genannten Komponenten Bc) können einzeln oder als Gemische eingesetzt werden.

Bei der Komponente Bd) kann es sich prinzipiell um die gleichen Verbindungen handeln, wie sie oben unter Ad) beschrieben sind, sind jedoch von der für das Polyurethan (A) eingesetzten Komponente Ad) unabhängig.

Bevorzugte Verbindungen Bd) sind Mercaptoessigsäure (Thioglykolsäure), Hydroxyessigsäure, Hydroxypropionsäure (Milchsäure), Hydroxybernsteinsäure, Hydroxypivalinsäure, Dimethylolpropionsäure, Dimethylolbuttersäure, N-(2'-Aminoethyl)-3-aminopropionsäure, Hydroxyethansulfonsäure, Hydroxypropansulfonsäure, Aminoethansulfonsäure, Aminopropansulfonsäure, Glycin (Aminoessigsäure), N-Cyclohexylaminoethansulfonsäure oder N-Cyclohexylaminopropansulfonsäure.

Bevorzugt sind Dimethylolpropionsäure und Dimethylolbuttersäure, besonders bevorzugt ist Dimethylolpropionsäure.

Bei der Komponente Be) kann es sich prinzipiell um die gleichen Verbindungen handeln, wie sie oben unter Ae) beschrieben sind, sind jedoch von der für das Polyurethan (A) eingesetzten Komponente Ae) unabhängig.

Bevorzugte Verbindungen Be) sind Ethanolamin, Diethanolamin, Triethylamin, Triethanolamin, Dimethylethanolamin und Diethylethanolamin. Die Mengen an eingeführten chemisch gebundenen Säuregruppen und das Ausmaß der Neutralisation der Säuregruppen (das meist bei 40 bis 100 % der Äquivalenzbasis beträgt) soll vorzugsweise hinreichend sein, um eine Dispergierung der Polyurethane in einem wässrigen Medium sicherzustellen, was dem Fachmann geläufig ist.

Bei der Komponente Bf) kann es sich prinzipiell um die gleichen Verbindungen handeln, wie sie oben unter Af) beschrieben sind, sind jedoch von der für das Polyurethan (A) eingesetzten Komponente Af) unabhängig.

Bevorzugte Verbindungen Bf) sind Methanol, Ethanol, n-Propanol, Isopropanol, n-Butanol, Methylamin, Ethylamin, n-Propylamin, Diisopropylamin, Dimethylamin, Diethylamin, Di-n-propylamin und Diisopropyl-amin.

Bei der optionalen Komponente Bg) handelt es sich um wenigstens ein, beispielsweise ein bis drei, bevorzugt ein bis zwei und besonders bevorzugt genau ein aliphatisches Di- oder Polyisocyanat, bevorzugt Polyisocyanat.

Aliphatische Isocyanate sind solche, die ausschließlich Isocyanatgruppen aufweisen, die an solche Kohlenstoffatome gebunden sind, die Bestandteil gerader oder verzweigter, acyclischer Ketten sind, bevorzugt solche, die ausschließlich Isocyanatgruppen aufweisen, die an gerade oder verzweigte, acyclische Ketten gebunden sind und besonders bevorzugt solche, die ausschließlich an gerade oder verzweigte, acyclische Kohlenwasserstoffketten gebundene Isocyanatgruppen aufweisen.

Bei den aliphatischen Diisocyanaten oder Polyisocyanaten handelt es sich bevorzugt um Isocyanate mit 4 bis 20 C-Atomen. Beispiele für übliche Diisocyanate sind 1,4-Tetramethylendiisocyanat, 1,5-Pentamethylendiisocyanat, 1,6-Hexamethylendiisocyanat, 2-Methyl-1,5-diisocyanatopentan, 1,8-Octamethylendiisocyanat, 1,10-Decamethylendiisocyanat, 1,12-Dodecamethylendiisocyanat, 1,14-Tetradecamethylendiisocyanat, 2,2,4- und 2,4,4-Trimethylhexandiisocyanat, 1,3-Bis(1-isocyanato-1-methylethyl)benzol (m-TMXDI), sowie Derivate des Lysindiisocyanats. Es können Gemische der genannten Diisocyanate vorliegen.

Bevorzugt sind 1,6-Hexamethylendiisocyanat und 2,2,4- und 2,4,4-Trimethylhexandiisocyanatgemische, besonders bevorzugt ist 1,6-Hexamethylendiisocyanat.

Es können auch Gemische der genannten Diisocyanate vorliegen.

2,2,4- und 2,4,4-Trimethylhexandiisocyanat liegen beispielsweise als Gemisch vor im Verhältnis 1,5:1 bis 1:1,5, bevorzugt 1,2:1 - 1:1,2, besonders bevorzugt 1,1:1 - 1:1,1 und ganz besonders bevorzugt 1:1.
Bei den Polyisocyanaten kann es sich um monomere Isocyanate mit mehr als zwei Isocyanatgruppen handeln oder um Oligomere der oben genanten Diisocyanate.

Ein Beispiel für ersteres sind Triisocyanatononan (4-Isocyanatomethyl-1, 8-octandiisocyanat) oder 2'-lsocyanatoethyl-(2,6-diisocyanatohexanoat).

Beispiele für letztere sind Isocyanurat-, Biuret-, Uretdion-, Allophanat-, Iminooxadiazintrion- und/oder Carbodiimidgruppen haltige Oligomere, die durch Oligomerisation mindestens eines, bevorzugt genau eines oben genanten Diisocyanate erhältlich sind, besonders bevorzugt durch Umsetzung von 1,6-Hexamethylendiisocyanat.

Bevorzugte Polyisocyanate sind Isocyanurat-, Uretdion- und/oder Allophanatgruppen haltige Oligomere, besonders bevorzugt Isocyanurat- und/oder Allophanatgruppen haltige Oligomere und in einer ganz besonders bevorzugten Ausführungsform handelt es sich bei der Verbindung Bg) um ein allophanatgruppenhaltiges Oligomer auf Basis 1,6Hexamethylendiisocyanat, bei dem 1,6-Hexamethylendiisocyanat mit zumindest einem Teil der Verbindung Bb) zu einem allophanatgruppenhaltigen Oligomer umgesetzt wird.

Diese Umsetzung ergibt eine Verbindung mit mindestens zwei freien Isocyanatgruppen, mindestens einer Allophanatgruppe und mindestens einer, durch ihre gegenüber Isocyanatgruppen reaktive Gruppe an die Allophanatgruppe gebundene, radikalisch polymerisierbare C=C-Doppelbindung.

Eine derartige Komponente Bg) enthält einen Gehalt an Allophanatgruppen (berechnet als C₂N₂HO₃ = 101 g/mol) von 1 bis 35 Gew.-%, bevorzugt von 5 bis 30 Gew.-%, besonders bevorzugt von 10 bis 35 Gew.-%. Die Polyurethane (B) aus den Aufbaukomponenten Ba) bis Bd) sowie gegebenenfalls Bf) und Bg) enthalten 1 bis 30 Gew.-%, bevorzugt von 1 bis 25 Gew.-%, besonders bevorzugt von 2 bis 20 Gew.-% Allophanatgruppen. Weiterhin enthält die eingesetzte Komponente Bg) in der Regel weniger als 5 Gew.-% Uretdion.

Bevorzugt sind Verbindungen der folgenden Formel 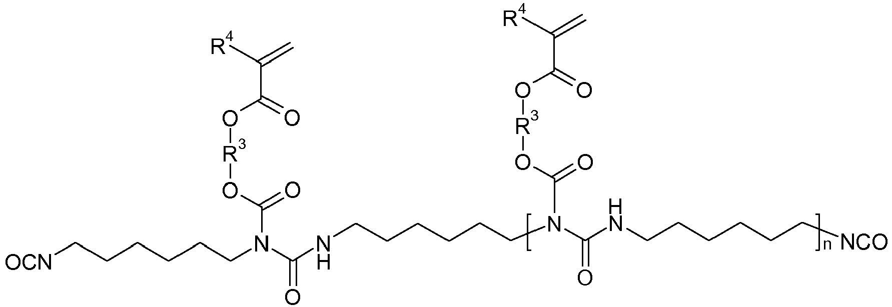 worin
R³ einen zweiwertigen aliphatischen oder cycloaliphatischen, bevorzugt aliphatischen Rest, bevorzugt Kohlenwasserstoffrest, der 2 bis 12, bevorzugt 2 bis 8, besonders bevorzugt 2 bis 4 Kohlenstoffatome aufweist,
R⁴ Wasserstoff oder Methyl, bevorzugt Wasserstoff, ist und
n im statistischen Mittel 0 oder eine positive Zahl, bevorzugt Werte von 0 bis 5, besonders bevorzugt 0,5 bis 3 und ganz besonders bevorzugt 1 bis 2 annehmen kann.

Beispiele für R³ sind 1,2-Ethylen, 1,1-Dimethyl-1,2-ethylen, 1,2-Propylen, 1,3-Propylen, 2-Methyl-1,3-propylen, 2-Ethyl-1,3-propylen, 2-Butyl-2-ethyl-1,3-propylen, 2,2-Dimethyl-1,3-propylen, 1,2-Butylen, 1,3-Butylen, 1,4-Butylen, 1,5-Pentylen, 1,6-Hexylen, 2-Ethyl-1,3-hexylen, 1,8-Octylen, 2,4-Diethyl-1,3-octylen oder 1,10-Decylen, bevorzugt 1,2-Ethylen, 1,2-Propylen, 1,3-Propylen oder 1,4-Butylen, besonders bevorzugt 1,2-Ethylen oder 1,2-Propylen und ganz besonders bevorzugt 1,2-Ethylen.

Bevorzugt weist diese Komponente einen NCO-Gehalt von 10 bis 18, bevorzugt 12 bis 16 und besonders bevorzugt 13 bis 16 Gew% und ein mittleres Molekulargewicht von 600 bis 1200, bevorzugt 700 bis 1000 und besonders bevorzugt von 700 bis 900 g/mol auf.

Deartige Verbindungen sind beispielsweise unter dem Handelsnamen Laromer® LR 9000 von der BASF SE, Ludwigshafen, kommerziell erhältlich.

Die Herstellung solcher Verbindungen ist bekannt aus WO 00/39183 A1, dort besonders Beispiel 1.1. und Produkte 1 bis 7 aus Tabelle 1.

Es stellt eine bevorzugte Ausführungsform der vorliegenden Erfindung dar, keine oder nur untergeordnete Mengen der Komponente Bg) einzusetzen, bevorzugt nur untergeordnete Mengen Bg) einzusetzen.

Mit "nur untergeordnete Mengen" ist dabei gemeint, daß der Anteil der NCO-Gruppen der Komponente Bg) an den insgesamt eingesetzten NCO-Gruppen aus den Verbindungen Ba) und Bg) weniger als 50 mol%, bevorzugt nicht mehr als 40 mol%, besonders bevorzugt nicht mehr als 30 und ganz besonders bevorzugt nicht mehr als 20 mol% beträgt.

In einer bevorzugten Ausführungsform der vorliegenden Erfindung weist das Polyurethan (B) für sich allein nach Trocknung und vor UV-Härtung eine Pendeldämpfung gemäß DIN 53157 von mindestens 50 Schwingungen auf.

In einer anderen, alternativen, gleichermaßen bevorzugten Ausführungsform enthält das Polyurethan (B) als Aufbaukomponente Ba) mindestens ein cycloaliphatisches Diund/oder Polyisocyanat und/oder als Aufbaukomponente Bc) mindestens ein cycloaliphatisches Diol und/oder ein aliphatisches Diol, bei dem die beiden Hydroxygruppen durch nicht mehr als vier Kohlenstoffatome voneinander getrennt sind, d.h. es handelt sich um eine aliphatisches 1,2-, 1,3- oder 1,4-Diol.

Besonders bevorzugt handelt es sich bei der Komponente Ba) um Isophorondiisocyanat und/oder ein isocyanuratgruppenhaltiges Polyisocyanat auf Basis Isophorondiisocyanat und/oder die Komponente Bc) ist ausgewählt aus der Gruppe bestehend aus Ethylenglykol, 1,2-Propandiol, 1,3-Propandiol, 2-Butyl-2-ethyl-1,3-Propandiol, Neopentylglykol, 1,4-Butandiol, Bis-(4-hydroxycyclohexan)isopropyliden, 1,2-, 1,3- oder 1,4-Cyclohexandiol, 1,2-, 1,3- und 1,4-Cyclohexandimethanol.

Ganz besonders bevorzugt handelt es sich bei der Komponente Ba) um ein isocyanuratgruppenhaltiges Polyisocyanat auf Basis Isophorondiisocyanat und optional kann zusätzlich Komponente Bc) ausgewählt sein aus der Gruppe bestehend aus Ethylenglykol, 1,2-Propandiol, 1,3-Propandiol, 2-Butyl-2-ethyl-1,3-Propandiol, Neopentylglykol, 1,4-Butandiol, Bis-(4-hydroxycyclohexan)isopropyliden, 1,2-, 1,3- oder 1,4-Cyclohexandiol, 1,2-, 1,3- und 1,4-Cyclohexandimethanol.

In einer bevorzugten Ausführungsform weist das Polyurethan (B) nach Trocknung und vor Härtung eine Glasübergangstemperatur Tg (extrapolierte Onset Temperatur, T_{eig}) mit der DSC-Methode (Differential Scanning Calorimetry) gemäß ASTM 3418/82 mit einer Aufheizrate von 10 °C/min bestimmt von mehr als 10 °C, bevorzugt mindestens 15 °C und besonders bevorzugt mindestens 40 °C auf.

Die Urethan(meth)acrylate (A) und (B) sind herstellbar, indem man die jeweiligen Komponenten, gegebenenfalls nach gestaffelter Zugabe einzelner Komponenten, miteinander bei Temperaturen von 25 bis 100 °C, bevorzugt 40 bis 90 °C über einen Zeitraum von 3 bis 20 Stunden, bevorzugt von 5 bis 12 Stunden unter Rühren oder Umpumpen umsetzt.

Während der Umsetzung kann die Temperatur gleichbleiben oder kontinuierlich oder stufenweise erhöht werden.

Die Umsetzung wird bevorzugt durch Zugabe eines geeigneten Katalysators beschleunigt. Solche Katalysatoren sind literaturbekannt, beispielsweise aus G. Oertel (Hrsg.), Polyurethane, 3. Auflage 1993, Carl Hanser Verlag, München - Wien, Seiten 104 bis 110, Kapitel 3.4.1. "Katalysatoren", bevorzugt sind organische Amine, insbesondere tertiäre aliphatische, cycloaliphatische oder aromatische Amine, Brønsted-Säuren und/oder Lewis-saure Organometallverbindungen, besonders bevorzugt sind Lewis-saure Organometallverbindungen. Bevorzugt handelt es sich dabei um Lewis-saure organische Metallverbindungen, für die z.B. Zinnverbindungen in Frage kommen, wie beispielsweise Zinn-(II)-salze von organischen Carbonsäuren, z.B. Zinn-(II)-diacetat, Zinn-(II)-dioctoat, Zinn-(II)-bis(ethylhexanoat) und Zinn-(II)-dilaurat und die Dialkylzinn-(IV)-salze von organischen Carbonsäuren, z.B. Dimethylzinn-diacetat, Dibutylzinndiacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat. Zudem können Zink-(II)-Salze eingesetzt werden, wie beispielsweise Zink-(II)-dioctoat.

Auch Metallkomplexe wie Acetylacetonate des Eisens, Titans, Aluminiums, Zirkons, Mangans, Nickels, Zinks und Cobalts sind möglich.

Weitere Metallkatalysatoren werden von Blank et al. in Progress in Organic Coatings, 1999, Vol. 35, Seiten 19-29 beschrieben.

Als Zinn- und Zink-freie Alternativen werden u.a. Zirkonium-, Wismut-, Titan- und Aluminium-Verbindungen eingesetzt. Dies sind z.B. Zirkoniumtetraacetylacetonat (z.B. K-KAT® 4205 der Firma King Industries); Zirkoniumdionate (z.B. K-KAT® XC-9213; XC-A 209 und XC-6212 der Firma King Industries); Aluminiumdionat (z.B. K-KAT® 5218 der Firma King Industries).

Als Zink- und Wismutverbindungen kommen dabei solche in Betracht, in denen folgende Anionen eingesetzt werden: F⁻, Cl⁻, ClO⁻, ClO₃⁻, ClO₄⁻, Br⁻, J⁻, JO₃⁻, CN⁻, OCN⁻, NO₂⁻ NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻ H₂PO₄⁻, PO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht. Bevorzugt sind dabei die Carboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Salze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Format, Acetat, Propionat, Hexanoat, Neodekanoat und 2-Ethylhexanoat.

Unter den Zink-Katalysatoren sind die Zink-carboxylate bevorzugt, besonders bevorzugt solche von Carboxylaten, die mindestens sechs Kohlenstoffatome, ganz besonders bevorzugt mindestens acht Kohlenstoffatome aufweisen, insbesondere Zink-(II)-diacetat oder Zink-(II)-dioctoat oder Zink-(II) neodecanoat. Handelsübliche Katalysatoren sind beispielsweise Borchi® Kat 22 von OMG Borchers GmbH, Langenfeld, Deutschland.

Unter den Wismut-Katalysatoren sind die Wismut-carboxylate bevorzugt, besonders bevorzugt solche von Carboxylaten, die mindestens sechs Kohlenstoffatome aufweisen, insbesondere Wismut-octoate, -ethylhexanoate, -neodecanoate, oder -pivalate; beispielsweise K-KAT 348, XC-B221; XC-C227, XC 8203 und XK-601 von King Industries, TIB KAT 716, 716LA, 716XLA, 718, 720, 789 von TIB Chemicals und solchen von Shepherd Lausanne, sowie beispielsweise Borchi® Kat 24; 315; 320 von OMG Borchers GmbH, Langenfeld, Deutschland.

Es kann sich dabei auch um Gemische verschiedener Metalle handeln, wie beispielsweise in Borchi® Kat 0245 von OMG Borchers GmbH, Langenfeld, Deutschland

Unter den Titanverbindungen sind die Titan tetra-alkoholate Ti(OR)₄ bevorzugt, besonders bevorzugt solche von Alkoholen ROH mit 1 bis 8 Kohlenstoffatomen, beispielsweise Methanol, Ethanol, *iso*-Propanol, n-Propanol, n-Butanol, *iso*-Butanol, *sek-*Butanol, *tert*-Butanol, n-Hexanol, n-Heptanol, n-Octanol, bevorzugt sind Methanol, Ethanol, *iso*-Propanol, n-Propanol, n-Butanol, *tert*-Butanol, besonders bevorzugt sind iso-Propanol und n-Butanol.

Diese Katalysatoren sind für lösungsmittel-, wasser-basierte und/oder blockierte Systeme geeignet.

Molybdän-, Wofram- und Vanadium-Katalysatoren, werden insbesondere für den Umsatz blockierter Polyisocyanate unter WO 2004/076519 und WO 2004/076520 beschrieben.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Dioctylzinn-dilaurat, Zink-(II)-dioctoat, Zirkon-Acetylacetonat, Zirkon-2,2,6,6-tetramethyl-3,5-heptandionat sowie Wismut-2-ethylhexanoat.

Besonders bevorzugt sind jedoch Dibutylzinndilaurat, Wismut neodecanoat und Wismut-2-ethylhexanoat, ganz besonders bevorzugt sind Wismut neodecanoat und Wismut-2-ethylhexanoat.

Es ist möglich, die Wirkung der Katalysatoren zusätzlich durch Anwesenheit von Säuren zu verstärken, beispielsweise durch Säuren mit einem pKa-Wert von < 2,5, wie beschrieben in EP 2316867 A1 oder mit einem pKa-Wert zwischen 2,8 und 4,5, wie beschrieben in WO 04/029121 A1. Bevorzugt ist die Verwendung von Säuren mit einem pKa-Wert von nicht mehr als 4,8, besonders bevorzugt von nicht mehr als 2,5.

Es ist auch denkbar, die Reaktion ohne Katalysator durchzuführen, in diesem Fall muß das Reaktionsgemisch jedoch höheren Temperaturen und/oder längeren Reaktionszeiten ausgesetzt werden.

In einer bevorzugten Ausführungsform der vorliegenden Erfindung werden die Urethan(meth)acrylate (A) und (B) jeweils zinnfrei hergestellt.

Um eine unerwünschte Polymerisierung der (Meth)acrylatgruppen während der Reaktion zu vermeiden, können Polymerisationsinhibitoren zugesetzt werden. Derartige Inhibitoren sind beispielsweise beschrieben in WO 03/035596, Seite 5, Zeile 35 bis Seite 10, Zeile 4, worauf hiermit im Rahmen der vorliegenden Offenbarung Bezug genommen sei.

Die Reaktion kann als beendet gelten, wenn der NCO-Wert den theoretischen Umsatzwert zu mindestens 95%, bevorzugt zu mindestens 97% und besonders bevorzugt zu mindestens 98% erreicht hat.

### Komponente (C)

Die erfindungsgemäße Dispersion kann wenigstens eine weitere Verbindung enthalten, wie sie üblicherweise als Reaktivverdünner eingesetzt wird. Dazu zählen z. B. die Reaktivverdünner, wie sie in P.K.T. Oldring (Herausgeber), Chemistry & Technology of UV & EB Formulations for Coatings, Inks & Paints, Vol. II, Chapter III: Reactive Diluents for UV & EB Curable Formulations, Wiley and SITA Technology, London 1997 beschrieben sind.

Bevorzugte Reaktivverdünner sind von der Komponente Ab) verschiedene Verbindungen, die wenigstens eine radikalisch polymerisierbare C=C-Doppelbindung aufweisen.

Reaktivverdünner sind beispielsweise Ester der (Meth)acrylsäure mit Alkoholen, die 1 bis 20 C-Atome aufweisen, z.B. (Meth)acrylsäuremethylester, (Meth)acrylsäureethylester, (Meth)acrylsäurebutylester, (Meth)acrylsäure-2-ethylhexylester, 2-Hydroxyethylacrylat, 4-Hydroxybutylacrylat , Dihydrodicyclopentadienylacrylat, vinylaromatische Verbindungen, z.B. Styrol, Divinylbenzol, α,β-ungesättigte Nitrile, z.B. Acrylnitril, Methacrylnitril, α,β-ungesättigte Aldehyde, z.B. Acrolein, Methacrolein, Vinylester, z.B. Vinylacetat, Vinylpropionat, halogenierte ethylenisch ungesättigte Verbindungen, z.B. Vinylchlorid, Vinylidenchlorid, konjugierte ungesättigte Verbindungen, z.B. Butadien, Isopren, Chloropren, einfach ungesättigte Verbindungen, z.B. Ethylen, Propylen, 1-Buten, 2-Buten, iso-Buten, cyclische einfach ungesättigte Verbindungen, z.B. Cyclopenten, Cyclohexen, Cyclododecen, N-Vinylformamid, Allylessigsäure, Vinylessigsäure, monoethylenisch ungesättigten Carbonsäuren mit 3 bis 8 C-Atomen sowie deren wasserlöslichen Alkalimetall-, Erdalkalimetall- oder Ammoniumsalze wie beispielsweise: Acrylsäure, Methacrylsäure, Dimethylacrylsäure, Ethacrylsäure, Maleinsäure, Citraconsäure, Methylenmalonsäure, Crotonsäure, Fumarsäure, Mesaconsäure und Itaconsäure, N-Vinylpyrrolidon, N-Vinyllactame, wie z.B. N-Vinylcaprolactam, N-Vinyl-N-Alkyl-carbonsäureamide oder N-Vinyl-carbonsäureamide, wie z. B. N-Vinylacetamid, N-Vinyl-N-methylformamid und N-Vinyl-N-methylacetamid oder Vinylether, z.B. Methylvinylether, Ethylvinylether, *n*-Propylvinylether, *iso*-Propylvinylether, *n*-Butyl-vinylether, *sek*-Butylvinylether, *iso*-Butylvinylether, *tert*-Butylvinylether, 4-Hydroxybutylvinylether, sowie Gemische davon.

Verbindungen mit mindestens zwei radikalisch polymerisierbare C=C-Doppelbindungen: Dazu zählen insbesondere die Diester und Polyester der zuvorgenannten α,β-ethylenisch ungesättigten Mono- und/oder Dicarbonsäuren mit Diolen oder Polyolen. Besonders bevorzugte Beispiele für (Meth)acrylsäureester von Polyolen sind Ethylenglykoldiacrylat, 1,2-Propandioldiacrylat, 1,3-Propandioldiacrylat, 1,4-Butandioldiacrylat, 1,3-Butandioldiacrylat, 1,5-Pentandioldiacrylat, 1,6-Hexandioldiacrylat, 1,8-Octandioldiacrylat, Neopentylglykoldiacrylat, 1,1-, 1,2-, 1,3- und 1,4-Cyclohexandimethanoldiacrylat, 1,2-, 1,3- oder 1,4-Cyclohexandioldiacrylat, Trimethylolpropantriacrylat, Ditrimethylolpropanpenta- oder -hexaacrylat, Pentaerythrittri- oder - tetraacrylat, Glycerindi- oder -triacrylat, sowie Di- und Polyacrylate von Zuckeralkoholen, wie beispielsweise Sorbit, Mannit, Diglycerol, Threit, Erythrit, Adonit (Ribit), Arabit (Lyxit), Xylit, Dulcit (Galactit), Maltit oder Isomalt.

Bevorzugt sind auch die Ester alkoxylierter Polyole, mit α,β-ethylenisch ungesättigten Mono- und/oder Dicarbonsäuren wie z. B. die Polyacrylate oder -methacrylate von alkoxyliertem Trimethylolpropan, Glycerin oder Pentaerythrit.

Bevorzugt sind (Meth)Acrylate von Verbindungen der Formel (IVa) bis (IVd), 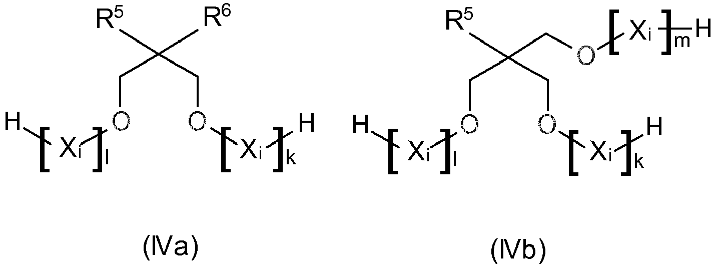 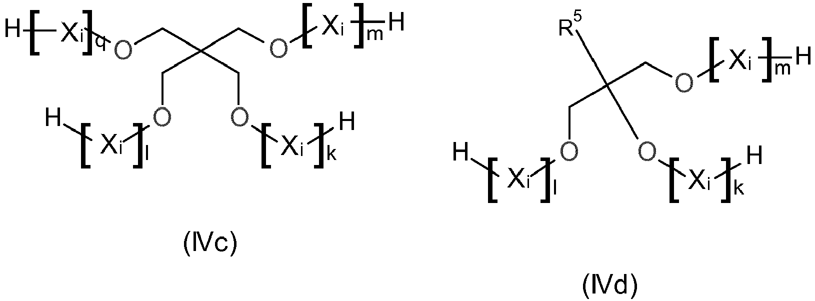 worin
R⁵ und R⁶ unabhängig voneinander Wasserstoff oder gegebenenfalls durch Aryl, Alkyl, Aryloxy, Alkyloxy, Heteroatome und/oder Heterocyclen substituiertes C₁ - C₁₈-Alkyl,
k, l, m, q unabhängig voneinander je für eine ganze Zahl von 1 bis 10, bevorzugt 1 bis 5 und besonders bevorzugt 1 bis 3 steht und
jedes Xᵢ für i = 1 bis k, 1 bis I, 1 bis m und 1 bis q unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-,
worin Ph für Phenyl und Vin für Vinyl steht.

Darin bedeuten gegebenenfalls durch Aryl, Alkyl, Aryloxy, Alkyloxy, Heteroatome und/oder Heterocyclen substituiertes C₁ - C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Decyl, Dodecyl, Tetradecyl, Heptadecyl, Octadecyl, 1,1-Dimethylpropyl, 1,1-Dimethylbutyl, 1,1,3,3-Tetramethylbutyl, bevorzugt Methyl, Ethyl oder n-Propyl, ganz besonders bevorzugt Methyl oder Ethyl.

Besonders bevorzugt handelt es sich dabei um (Meth)Acrylate von ein- bis zwanzigfach und ganz besonders bevorzugt drei- bis zehnfach ethoxyliertem, propoxyliertem oder gemischt ethoxyliertem und propoxyliertem und insbesondere ausschließlich ethoxyliertem Glycerin, Trimethylolpropan, Trimethylolethan oder Pentaerythrit.

Ganz besonders bevorzugt Trimethylolpropantriacrylat, Pentaerythrittetraacrylat, und Acrylate von ein- bis zwanzigfach alkoxyliertem, besonders bevorzugt ethoxyliertem Trimethylolpropan, Glycerin oder Pentaerythrit.

Geeignet sind weiterhin die Ester alicylischer Diole, wie Cyclohexandioldi(meth)acrylat und Bis(hydroxymethyl)cyclohexandi-(meth)acrylat. Weitere geeignete Reaktivverdünner sind Trimethylolpropanmonoformalacrylat, Glycerinformalacrylat, 4-Tetrahydropyranylacrylat, 2-Tetrahydropyranylmethacrylat und Tetrahydrofurfurylacrylat.

Die genannten Reaktivverdünner können optional durch Zugabe von geringen Mengen primärer oder sekundärer Amine modifiziert werden.

In diesem Fall werden dem Reaktivverdünner 0,1 - 8 Gew%, bevorzugt 0,5 - 6 und besonders bevorzugt 1 bis 6 Gew% Verbindungen mit einer primären oder sekundären Aminogruppen zugegeben.

Zu nennen sind beispielsweise primäre Monoamine wie C₁-C₂₀-Alkylamine, insbesondere n-Butylamin, n-Hexylamin, 2-Ethylhexylamin, Octadecylamin und cycloaliphatische Amine wie Cyclopentylamin oder Cyclohexylamin.

Als sekundäre Monoamine zu nennen sind beispielsweise wie Di-C₁-C₂₀-alkylamine, insbesondere Diethylamin, Di-n-Butylamin, Di-n-Hexylamin und Di-iso Propylamin.

Als Verbindungen mit primären oder sekundären Aminogruppen mit mindestens einer Hydroxygruppe genannt seien Alkanolamine, z.B. Mono- oder Diethanolamin, Aminoethoxyethanol, 2-Aminopropan-1-ol und Di iso Propanolamin.

Es stellt eine bevorzugte Ausführungsform der vorliegenden Erfindung dar, auf niedermolekulare Reaktivverdünner zu verzichten, d.h. diese lediglich in Mengen von nicht mehr als 5 Gew%, besonders bevorzugt in Mengen von nicht mehr als 1 Gew% einzusetzen.

Unter "niedermolekularen Reaktivverdünnern" werden dabei Verbindungen mit ein oder zwei radikalisch polymerisierbaren C=C-Doppelbindungen und einem Molekulargewicht von nicht mehr als 500 g/mol verstanden.

Sofern die Aushärtung der erfindungsgemäßen Dispersionen nicht mit Elektronenstrahlen, sondern mittels UV-Strahlung erfolgt, enthalten die erfindungsgemäßen Zubereitungen vorzugsweise wenigstens einen Photoinitiator, der die Polymerisation ethylenisch ungesättigter Doppelbindungen initiieren kann.

Photoinitiatoren können beispielsweise dem Fachmann bekannte Photoinitiatoren sein, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen z.B. Mono- oder Bisacylphosphinoxide, wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin® TPO der BASF SE), Ethyl-2,4,6-trimethylbenzoylphenylphosphinat (Lucirin® TPO L der BASF SE), Bis-(2,4,6-trimethylbenzoyl)-phenylphosphinoxid (Irgacure® 819 der Firma BASF SE ehem. Ciba Spezialitätenchemie), Benzophenone, Hydroxyacetophenone, Phenylglyoxylsäure und ihre Derivate oder Gemische dieser Photoinitiatoren. Als Beispiele seien genannt Benzophenon, Acetophenon, Acetonaphthochinon, Methylethylketon, Valerophenon, Hexanophenon, α-Phenylbutyrophenon, p-Morpholinopropiophenon, Dibenzosuberon, 4-Morpholinobenzophenon, 4-Morpholinodeoxybenzoin, p-Diacetylbenzol, 4-Aminobenzophenon, 4'-Methoxyacetophenon, β-Methylanthrachinon, *tert*-Butyl-anthrachinon, Anthrachinoncarbonysäureester, Benzaldehyd, α-Tetralon, 9-Ace-tylphenanthren, 2-Acetylphenanthren, 10-Thioxanthenon, 3-Acetylphenanthren, 3-Acetylindol, 9-Fluorenon, 1-lndanon, 1,3,4-Triacetylbenzol, Thioxanthen-9-on, Xanthen-9-on, 2,4-Dimethylthioxanthon, 2,4-Diethylthioxanthon, 2,4-Di-*iso*-propylthioxanthon, 2,4-Dichlorthioxanthon, Benzoin, Benzoin-*iso*-butylether, Chloroxanthenon, Benzoin-tetrahydropyranylether, Benzoin-methylether, Benzoin-ethylether, Benzoin-butylether, Benzoin-*iso*-propylether, 7-H-Benzoin-methylether, Benz[de]anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclohexan-1-ol, 2-Hydroxy-2,2-dimethylacetophenon, 2,2-Dimethoxy-2-phenylaceto-phenon, 2,2-Diethoxy-2-phenylacetophenon, 1,1-Dichloracetophenon, 1-Hydroxyacetophenon, Acetophenondimethylketal, o-Methoxybenzophenon, Triphenylphosphin, Trio-Tolylphosphin, Benz[a]anthracen-7,12-dion, 2,2-Diethoxyacetophenon, Benzilketale, wie Benzildimethylketal, 2-Methyl-1-[4-(methylthio)phenyl]-2-morpholinopropan-1-on, Anthrachinone wie 2-Methylanthrachinon, 2-Ethylanthrachinon, 2-*tert*-Butylanthrachinon, 1-Chloranthrachinon, 2-Amylanthrachinon und 2,3-Butandion.

Geeignet sind auch nicht- oder wenig vergilbende Photoinitiatoren vom Phenylglyoxalsäureestertyp, wie in DE-A 198 26 712, DE-A 199 13 353 oder WO 98/33761 beschrieben.

Typische Gemische umfassen beispielsweise 2-Hydroxy-2-Methyl-1-phenyl-propan-2-on und 1-Hydroxy-cyclohexyl-phenylketon, Bis(2,6-dimethoxybenzoyl)-2,4,4-trimethylpentylphosphinoxid und 2-Hydroxy-2-methyl-1-phenyl-propan-1-on, Benzophenon und 1-Hydroxy-cyclohexyl-phenylketon, Bis(2,6-dimethoxybenzoyl)-2,4,4-trimethylpentylphosphinoxid und 1-Hydroxy-cyclohexyl-phenylketon, 2,4,6-Trimethylbenzoyldiphenylphosphinoxid und 2-Hydroxy-2-methyl-1-phenyl-propan-1-on, 2,4,6-Trimethylbenzophenon und 4-Methylbenzophenon oder 2,4,6-Trimethylbenzophenon und 4-Methylbenzophenon und 2,4,6-Trimethylbenzoyldiphenylphosphinoxid.

Bevorzugt unter diesen Photoinitiatoren sind 2,4,6-Trimethylbenzoyldiphenylphosphinoxid, Ethyl-2,4,6-trimethylbenzoylphenylphosphinat, Bis-(2,4,6-trimethylbenzoyl)-phenylphosphinoxid, Benzophenon, 1-Benzoylcyclohexan-1-ol, 2-Hydroxy-2,2-di-methyl-acetophenon und 2,2-Dimethoxy-2-phenylacetophenon.

Die erfindungsgemäßen Dispersionen enthalten die Photoinitiatoren vorzugsweise in einer Menge von 0,05 bis 10 Gew.-%, besonders bevorzugt 0,1 bis 8 Gew.-%, insbesondere 0,2 bis 5 Gew.-%, bezogen auf die Gesamtmenge der Komponenten Aa) bis Ag) und (C).

Bevorzugt enthalten die erfindungsgemäßen Dispersionen keine thermischen Initiatoren.
Thermische Initiatoren im Sinne der vorliegenden Erfindung sind solche, die eine Halbwertzeit bei 60 °C von mindestens einer Stunde aufweisen. Die Halbwertszeit eines thermischen Initiators, ist die Zeit, nachdem die Ausgangsmenge des Initiators zur Hälfte in freie Radikale zerfallen ist.

Thermische Initiatoren sind erfindungsgemäß bevorzugt abwesend, liegen also in Mengen von weniger als 0,1 Gew.-% vor.

Die erfindungsgemäßen Dispersionen können weitere Lack-übliche Zusatzstoffe, wie Verlaufsmittel, Entschäumer, UV-Absorber, Farbstoffe, Pigmente und/oder Füllstoffe enthalten.

Geeignete Füllstoffe umfassen Silikate, z. B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc. Geeignete Stabilisatoren umfassen typische UV-Absorber wie Oxanilide, Triazine und Benzotriazol (letztere erhältlich als Tinuvin R-Marken der ehem. Ciba-Spezialitätenchemie, nunmehr BASF) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butyl-piperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-% bezogen auf die in der Zubereitung enthaltenen "festen" Komponenten eingesetzt.

### Komponente (E)

Polyamine mit 2 oder mehr primären und/oder sekundären Aminogruppen können vor allem dann eingesetzt werden, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wäßrige Dispersionen von vernetzten Polyurethanen oder Polyurethanen mit hohem Molgewicht gewünscht werden. In solchen Fällen geht man so vor, daß man Präpolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei primäre, zwei sekundäre oder eine primäre und eine sekundäre Aminogruppe enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan oder höhere Amine wie Triethylentetramin, Tetraethylenpentamin oder polymere Amine wie Polyethylenamine, hydrierte Poly-Acrylnitrile oder zumindest teilweise hydrolysierte Poly-N-Vinylformamide jeweils mit einem Molgewicht bis zu 2000, bevorzugt bis zu 1000 g/mol.

Die Amine können auch in blockierter Form, z.B. in Form der entsprechenden Ketimine (siehe z.B. CA-1 129 128), Ketazine (vgl. z.B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der Polyurethane zur Kettenverlängerung der Präpolymeren eingesetzt werden können. Bei der Verwendung derartiger verkappter Polyamine werden diese im allgemeinen mit den Präpolymeren in Abwesenheit von Wasser vermischt und diese Mischung anschließend mit dem Dispersionswasser oder einem Teil des Dispersionswassers vermischt, so daß hydrolytisch die entsprechenden Polyamine freigesetzt werden.

Bevorzugt werden Gemische von Di- und Triaminen verwendet, besonders bevorzugt Gemische von Isophorondiamin und Diethylentriamin.

Der Anteil an Polyaminen (E) in den erfindungsgemäßen Beschichtungsmassen kann bis zu 10, bevorzugt bis zu 8 mol-% und besonders bevorzugt bis zu 5 mol%, bezogen auf die Gesamtmenge an (Meth)acrylatgruppen betragen.

Der Feststoffgehalt der erfindungsgemäßen wässrigen Dispersionen liegt vorzugsweise in einem Bereich von etwa 5 bis 70, bevorzugt 20 bis 60 Gew.-%, besonders bevorzugt 30 bis 50 Gew%.

Bevorzugt sind Polyurethane (A), in denen die Isocyanatgruppen der Verbindungen der Komponente Aa) und, falls vorhanden, Ag) zu
- 20 bis 99 Mol-%, bevorzugt 40 bis 90 Mol-%, besonders bevorzugt 55 - 82 Mol% mit gegenüber Isocyanatgruppen reaktiven Gruppen wenigstens einer Verbindung der Komponente Ab),
- 0 bis 50 Mol-% bevorzugt 5 bis 40 Mol-%, besonders bevorzugt 10 - 30 Mol% mit gegenüber Isocyanatgruppen reaktiven Gruppen wenigstens einer Verbindung der Komponente Ac),
- 1 bis 25 Mol-%, bevorzugt 5 bis 20 Mol-%, besonders bevorzugt 8 bis 15 Mol% mit gegenüber Isocyanatgruppen wenigstens einer Verbindung der Komponente Ad),
- 0 bis 5 Mol-%, bevorzugt 0 bis 2 Mol-%, besonders bevorzugt 0 Mol% mit gegenüber Isocyanatgruppen wenigstens einer Verbindung der Komponente Ad),
umgesetzt sind. Die Angaben beziehen sich auf molare Äquivalente einer funktionellen Gruppe.

Besonders bevorzugte Dispersionen sind solche, die pro kg Polyurethan (A), bezogen auf die Summe der Komponenten Aa) bis Ad) und Ae) bis Ag), einen Gehalt an neutralisierten oder freien Säuregruppen aus Ad) von mindestens 0,4 mol aufweisen, bevorzugt mindestens 0,45 mol/kg.

In einer bevorzugten Ausführungsform übersteigt der mittlere Durchmesser (z-Mittelwert) der Teilchen des Polyurethans (A), gemessen bei 25 °C mittels dynamischer Lichtstreuung mit dem Malvern® Zetasizer 1000, in der wäßrigen Dispersion 40 nm, bevorzugt 30 nm und besonders bevorzugt 25 nm nicht.

Bevorzugt sind Polyurethane (B), in denen die Isocyanatgruppen der Verbindungen der Komponente Ba) und, falls vorhanden, Bg) zu
- 20 bis 99 Mol-%, bevorzugt 40 bis 90 Mol-%, besonders bevorzugt 55 - 82 Mol% mit gegenüber Isocyanatgruppen reaktiven Gruppen wenigstens einer Verbindung der Komponente Bb),
- 0 bis 50 Mol-% bevorzugt 5 bis 40 Mol-%, besonders bevorzugt 10 - 30 Mol% mit gegenüber Isocyanatgruppen reaktiven Gruppen wenigstens einer Verbindung der Komponente Bc),
- 1 bis 25 Mol-%, bevorzugt 5 bis 20 Mol-%, besonders bevorzugt 8 bis 15 Mol% mit gegenüber Isocyanatgruppen wenigstens einer Verbindung der Komponente Bd),
- 0 bis 5 Mol-%, bevorzugt 0 bis 2 Mol-%, besonders bevorzugt 0 Mol% mit gegenüber Isocyanatgruppen wenigstens einer Verbindung der Komponente Bd),
umgesetzt sind. Die Angaben beziehen sich auf molare Äquivalente einer funktionellen Gruppe.

Besonders bevorzugte Dispersionen sind solche, die pro kg Polyurethan (B), bezogen auf die Summe der Komponenten Ba) bis Bd) und Be) bis Bg), einen Gehalt an neutralisierten oder freien Säuregruppen aus Bd) von mindestens 0,25 mol/kg aufweisen, bevorzugt mindestens 0,3 mol/kg.

Der mittlere Durchmesser (z-Mittelwert) der Teilchen des Polyurethans (B), gemessen bei 25 °C mittels dynamischer Lichtstreuung mit dem Malvern® Zetasizer 1000, hat erfindungsgemäß eine untergeordnete Rolle. Es stellt eine bevorzugte Ausführungsform dar, Teilchen des Polyurethans (B) mit einem mittleren Durchmesser von mindestens 100, bevorzugt mindestens 150 und ganz besonders bevorzugt mindestens 200 nm einzusetzen.

In einer besonders bevorzugten Ausführungsform der vorliegenden Erfindung beträgt das Verhältnis der mittleren Durchmesser (z-Mittelwert) der Teilchen des Polyurethans (A) zu den der Teilchen des Polyurethans (B) von 1:2 bis 1:5, bevorzugt 1:2 bis 1:4 und besonders bevorzugt 1:2 bis 1:3.

Durch den Gehalt an neutralisierten oder freien Säuregruppen kann bevorzugt auf den Einsatz von organischen Lösungsmitteln, insbesondere von N-Methylpyrrolidon, zur Dispergierung verzichtet werden, so daß der VOC-Gehalt der erfindungsgemäßen Dispersionen nicht durch diese organischen Lösungsmittel erhöht wird.

Erfindungsgemäß wird das Mischungsverhältnis von Polyurethan (A) und Polyurethan (B) so gewählt, daß deren Mischung nach Trocknung und vor UV-Härtung eine Pendeldämpfung gemäß DIN 53157 von mindestens 20, bevorzugt mindestens 30 Schwingungen aufweist.

In einer anderen, alternativen gleichermaßen bevorzugten Ausführungsform wird das Mischungsverhältnis von Polyurethan (A) und Polyurethan (B) so gewählt, daß es von 20:80 bis 80:20, bezogen auf das Gewicht, besonders bevorzugt von 30:70 bis 70:30 und ganz besonders bevorzugt von 40:60 bis 60:40.

In einer bevorzugten Ausführungsform enthalten die erfindungsgemäßen Beschichtungsmassen ein Gemisch der Polyurethane (A) und (B).

Es ist jedoch auch möglich, die Polyurethane (A) und (B) getrennt voneinander auf das Substrat zu applizieren, bevorzugt zunächst Polyurethan (A) und dann Polyurethan (B).

Die erfindungsgemäßen Dispersionen eignen sich besonders als Beschichtungsmasse oder in Beschichtungsmassen, besonders bevorzugt zum Beschichten von Substraten wie Holz, Papier, Textil, Leder, Vlies, Kunststoffoberflächen, Glas, Keramik, mineralischen Baustoffen, wie Zement-Formsteine und Faserzementplatten, und insbesondere von Metallen oder beschichteten Metallen.

Mit besonderem Vorteil können die erfindungsgemäßen Dispersionen eingesetzt werden zur Beschichtung von Holz und Holzwerkstoffen und holzhaltigen Substraten, wie Faserplatten. Denkbar wäre auch die Beschichtung von Cellulosefaser haltigen Substraten, wie beispielsweise Papier, Pappe oder Karton. Ganz besonders bevorzugt sind die Dispersionen geeignet zur Beschichtung von Eiche, Fichte, Kiefer, Buche, Ahorn, Nußbaum, Macore, Kastanie, Platane, Rubinie, Esche, Birke, Pinie und Ulme, sowie Kork.

Vorteilhafterweise bilden die erfindungsgemäßen Dispersionen nach Härtung durch energiereiche Strahlung Filme mit guten anwendungstechnischen Eigenschaften, insbesondere eine gute Härte bei ausreichender Elastizität und dabei zugleich eine gute Anfeuerung.

Die Beschichtung der Substrate erfolgt nach üblichen, dem Fachmann bekannten Verfahren, wobei man wenigstens eine erfindungsgemäße Dispersion auf das zu beschichtende Substrat in der gewünschten Stärke aufbringt und die flüchtigen Bestandteile der Dispersionen entfernt durch Trocknen und/oder Ablüften bei Umgebungs- oder erhöhter Temperatur bis beispielsweise 60°C.

Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen oder Gießen erfolgen. Die Beschichtungsstärke liegt in der Regel in einem Bereich von etwa 3 bis 1000 g/m² und vorzugsweise 10 bis 200 g/m².

Gegebenenfalls kann, wenn mehrere Schichten des Beschichtungsmittels übereinander aufgetragen werden, nach jedem Beschichtungsvorgang eine Strahlungshärtung erfolgen.

Es ist jedoch auch möglich, die Polyurethane (A) und (B) getrennt voneinander auf das Substrat zu applizieren, bevorzugt zunächst Polyurethan (A) und dann Polyurethan (B). Dabei kann nach Auftragen der ersten Beschichtungsmasse zunächst getrocknet und optional auch gehärtet, bevorzugt nur getrocknet werden. In letzterem Fall findet die Strahlungshärtung abschließend nach Auftragen aller Schichten statt.

Sollte eine getrennte Auftragung der Polyurethane (A) und (B) gewählt werden, so werden diese jeweils getrennt voneinander als Dispersion bereitet und mit den Bestandteilen (C), (D) und/oder (E) versetzt, falls gewünscht.

Die Strahlungshärtung erfolgt durch Einwirkung energiereicher Strahlung, also UV-Strahlung oder Tageslicht, vorzugsweise Licht der Wellenlänge 250 bis 600 nm oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm².

Die Bestrahlung kann gegebenenfalls auch unter Ausschluß von Sauerstoff, z. B. unter Inertgas-Atmosphäre, durchgeführt werden. Als Inertgase eignen sich vorzugsweise Stickstoff, Edelgase, Kohlendioxid oder Verbrennungsgase. Desweiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A1 199 57 900 beschrieben ist.

In einem bevorzugten Verfahren erfolgt die Aushärtung kontinuierlich, indem man das mit der erfindungsgemäßen Zubereitung behandelte Substrat mit konstanter Geschwindigkeit an einer Strahlungsquelle vorbeiführt. Hierfür ist es erforderlich, dass die Aushärtungsgeschwindigkeit der erfindungsgemäßen Zubereitung ausreichend hoch ist.

Diesen unterschiedlichen zeitlichen Verlauf der Härtung kann man sich insbesondere dann zu Nutze machen, wenn sich an die Beschichtung des Gegenstandes noch ein Verarbeitungsschritt anschließt, bei dem die Filmoberfläche in direkten Kontakt mit einem anderen Gegenstand tritt oder mechanisch bearbeitet wird.

Der Vorteil der erfindungsgemäßen Dispersionen liegt darin, dass man die beschichteten Gegenstände unmittelbar im Anschluß an die Strahlungshärtung weiterverarbeiten kann, weil die Oberfläche nicht mehr klebt. Andererseits ist der getrocknete Film noch so flexibel und dehnbar, dass der Gegenstand noch verformt werden kann, ohne dass der Film dabei abplatzt oder reißt.

Die Erfindung wird anhand der folgenden, nicht einschränkenden Beispiele näher erläutert.

### Beispiele

### Beispiel 1:

### Herstellen einer Polyurethanacrylatdispersion (A)

In einem Rührkessel wurden 78 Teile Hydroxyethylacrylat, 37 Teile Neopentylglykol, 47 Teile Dimethylolpropionsäure, 572 Teile eines acrylierten Polyisocyanates (Laromer® LR 9000, BASF SE), 0,4 Teile 2,6 Di-t-butyl-p-Kresol, 0,5 Teile Hydrochinonmonomethylether und 184 Teile Aceton vorgelegt und bei Raumtemperatur 0,5 Teile Dibutylzinndilaurat zugegeben. Es wurde auf 80°C aufgeheizt und 6 Stunden bei 80°C reagieren gelassen. Danach wurde mit 130 Teilen Aceton verdünnt. Der NCO Wert betrug 0,24%. Man gab 184 Teile 10%ige Natronlauge zu, und tropfte anschließend während 45 Minuten 1400 Teile Wasser zu. Anschließend destillierte man das Aceton im Vakuum ab. Man stellte den Feststoffgehalt durch Wasserzugabe auf 30% ein. Die Viskosität betrug 320 mPas und die Teilchengröße der transluzenten Dispersion 21 nm.

### Beispiel 2:

### Herstellen einer Polyurethanacrylatdispersion (A)

In einem Rührkessel wurden 113 Teile Hydroxyethylacrylat, 69 Teile Dimethylolpropionsäure, 553 Teile eines acrylierten Polyisocyanates (Laromer® LR 9000, BASF SE), 0,4 Teile 2,6 Di-t-butyl-p-Kresol, 0,5 Teile Hydrochinonmonomethylether und 184 Teile Aceton vorgelegt und bei Raumtemperatur 0,5 Teile Borchi® Kat 24 (Bismutcarboxylat) zugegeben. Es wurde auf 80°C aufgeheizt und 6 Stunden bei 80°C reagieren lassen. Danach wurde mit 130 Teilen Aceton verdünnt. Der NCO Wert betrug 0,15%. Man gab 184 Teile 10%ige Natronlauge zu, und tropfte anschließend während 45 Minuten 1200 Teile Wasser zu. Anschließend destillierte man das Aceton im Vakuum ab. Der Feststoffgehalt betrug 37%. Die Viskosität beträgt 6200 mPas, die Teilchengröße der transluzenten Lösung betrug unter 20 nm.

### Beispiel 3: Herstellen einer Polyurethanacrylatdispersion (B)

Es wurde wie in Beispiel 2 verfahren, jedoch wurden die 553 Teile Laromer® LR 9000 durch eine Mischung aus 290 Teilen Laromer® LR9000 und 260 Teilen eines Isocyanu-rats von Isophorondiisocyanat (Vestanat® T1890 der Firma Evonik) ersetzt.
Die Viskosität der Dispersion betrug 580 mPas und die Teilchengröße war kleiner als 20 nm.

### Beispiel 4: Herstellen einer Polyurethanacrylatdispersion (B)

In einem Rührkessel wurden 50 Teile Cyclohexandimethanol, 39 Teile 1,4-Butandiol, 45 Teilen Neopentylglykol, 28 Teile Dimethylolpropionsäure, 183 Teile Bisphenol-A-diglycidyletherdiacrylat, 0,4 Teile 2,6 Di-t-butyl-p-Kresol, 0,2 Teile Hydrochinonmonomethylether und 184 Teile Aceton vorgelegt und bei Raumtemperatur 0,5 Teile Borchi® Kat 24 (Bismut carboxylat, OMG Borchers GmbH, Langenfeld) zugegeben. Es wurde auf 60°C aufgeheizt und anschließend 388 Teile Isophorondiisocyanat zugegeben. Nach 4 Stunden Reaktionszeit bei 80°C wird bei Erreichen von einem NCO-Wert von 0,8% durch Zugabe von 450 Teilen Aceton die Temperatur der Reaktionsmischung gesenkt und anschließend mit 63 Teilen 10%iger Natronlauge neutralisiert. Anschließend tropfte man während 45 Minuten 1200 Teile Wasser zu. Anschließend destillierte man das Aceton im Vakuum ab. Man stellte den Feststoffgehalt durch Wasserzugabe auf 38% ein. Die Viskosität betrug 145 mPas und die Teilchengröße der Dispersion 480 nm.

### Beispiel 4: Herstellen einer Polyurethanacrylatdispersion (B)

In einem Rührkessel wurden 50 Teile Cyclohexandimethanol, 39 Teile 1,4-Butandiol, 45 Teile Neopentylglykol, 28 Teile Dimethylolpropionsäure, 183 Teile Bisphenol-A-diglycidylether diacrylat, 0,4 Teile 2,6 Di-t-butyl-p-Kresol, 0,2 Teile Hydrochinonmonomethylether und 184 Teile Aceton vorgelegt und bei Raumtemperatur 0,5 Teile Borchi® Kat 24 (Bismut carboxylat, OMG Borchers GmbH, Langenfeld) zugegeben. Es wurde auf 60°C aufgeheizt und anschließend 388 Teile Isophorondiisocyanat zugegeben. Nach 4 Stunden Reaktionszeit bei 80°C wird bei Erreichen von einem NCO-Wert von 0,8% durch Zugabe von 450 Teilen Aceton die Temperatur der Reaktionsmischung gesenkt und anschließend mit 63 Teilen 10%iger Natronlauge neutralisiert. Anschließend tropfte man während 45 Minuten 1200 Teile Wasser zu. Anschließend destillierte man das Aceton im Vakuum ab. Man stellte den Feststoffgehalt durch Wasserzugabe auf 38% ein. Die Viskosität betrug 145 mPas und die Teilchengröße der Dispersion 480 nm.

### Beispiel 5: Herstellen einer Polyurethanacrylatdispersion (B)

In einem Rührkessel wurden 93 Teile Cyclohexandimethanol, 67 Teilen Neopentylglykol, 29 Teile Dimethylolpropionsäure, 96 Teile eines Polyester basierend auf Adipinsäure und Neopentylglykol mit einer Hydroxylzahl von 210 mg KOH/g, 0,4 Teile 2,6 Dit-butyl-p-Kresol, 0,2 Teile Hydrochinonmonomethylether und 184 Teile Aceton vorgelegt und bei Raumtemperatur 0,5 Teile Borchi® Kat 24 (Bismut carboxylat, OMG Borchers GmbH, Langenfeld) zugegeben. Es wurde auf 60°C aufgeheizt und anschließend 407 Teile Isophorondiisocyanat zugegeben. Nach 4 Stunden Reaktionszeit bei 80°C wird bei Erreichen von einem NCO-Wert von 0,2% durch Zugabe von 400 Teilen Aceton die Temperatur der Reaktionsmischung gesenkt und anschließend mit 84 Teilen 10%iger Natronlauge neutralisiert. Anschließend tropfte man während 45 Minuten 1500 Teile Wasser zu. Anschließend destillierte man das Aceton im Vakuum ab. Man stellte den Feststoffgehalt durch Wasserzugabe auf 33% ein. Die Viskosität betrug 200 mPas und die Teilchengröße der Dispersion 80 nm.

### Beispiel 6: Herstellen einer Polyurethanacrylatdispersion (B)

In einem Rührkessel wurden 86 Teile Cyclohexandimethanol, 62 Teile Neopentylglykol, 27 Teilen Dimethylolpropionsäure, 179 Teile Bisphenol-A-diglycidylether diacrylat, 0,4 Teile 2,6 Di-t-butyl-p-Kresol, 0,2 Teile Hydrochinonmonomethylether und 184 Teile Aceton vorgelegt und bei Raumtemperatur 0,5 Teile Borchi® Kat 24 (Bismut carboxylat, OMG Borchers GmbH, Langenfeld) zugegeben. Es wurde auf 60°C aufgeheizt und anschließend 379 Teile Isophorondiisocyanat zugegeben. Nach 4 Stunden Reaktionszeit bei 80°C wird bei Erreichen von einem NCO-Wert von 0,7% durch Zugabe von 400 Teilen Aceton die Temperatur der Reaktionsmischung gesenkt und anschließend mit 70 Teilen 10%iger Natronlauge neutralisiert. Anschließend tropfte man während 45 Minuten 1400 Teile Wasser zu. Anschließend destillierte man das Aceton im Vakuum ab. Man stellte den Feststoffgehalt durch Wasserzugabe auf 35% ein. Die Viskosität betrug 150 mPas und die Teilchengröße der Dispersion 124 nm.

**Zusammenfassung der physikalischen Parameter**

| Beispiel | Glasübergangstemperatur T_{g}, onset [°C] | Teilchengröße Dₕ, [nm] |
|---|---|---|
| 1 | -10 | 22 |
| 2 | -15 | 25 |
| 3 | +17 | 34 |
| 4 | +98 | 480 |
| 5 | +74 | 80 |
| 6 | +100 | 124 |

### Anwendungtechnische Prüfung

### Herstellen von Filmen

### Anwendungsbeispiel 1

Die Dispersionen bzw. Lösungen aus Beispiel 2 und 3 wurden im angegebenen Mischungsverhältnis miteinander vermischt, mit 4 Gew. % Photoinitiator Irgacure® 500 (BASF SE ehem. Ciba Spezialitätenchemie) versetzt und mittels eines 200µm-Kastenrakels auf ein vorgeschliffenes Holzsubstrat aufgetragen.

Es wurde 15 min bei Raumtemperatur und 30 min bei 60 °C im Umluftofen abgelüftet und in einer IST UV Anlage auf einem Transportband mit 10 m/min in zwei Durchgängen mit 2 Quecksilber UV Lampen (120W/cm) bestrahlt. Anschließend wurde zwischengeschliffen (160er Körnung) und anschließend erneut beschichtet (wie oben), getrocknet und erneut wie oben UV-gehärtet.

**Abmischungen Beispiel 2 und Beispiel 3**

| | | | | | | |
|---|---|---|---|---|---|---|
| Abmischung Beispiel 2 mit Beispiel 3 | 100:0 | 80:20 | 60:40 | 40:60 | 20:80 | 0:100 |
| Anfeuerung auch Buche (hell)[1] | 1 | 1 | 2 | 2 | 3 | 3,5 |
| Anfeuerung auf Nußbaum[1] | 1 | 1 | 1,5 | 2 | 2,5 | 3 |
| Pendeldämpfung vor UV-Belichtung[2] | klebt = nicht meßbar | 0 | 7 | 24 | 63 | 66 |
| Kaffee [3] 4% 16h | 3 | 3 | 4 | 5 | n.b. | 4 |
| Kaffee 4% 6h | 3 | 3 | 4 | 5 | n.b. | 5 |
| Kaffee 4% 1 h | 4 | 4 | 5 | 5 | n.b. | 5 |
| Ethanol 48% 1h | 5 | 5 | 5 | 5 | n.b. | 5 |
| Ethanol 48% 6h | 5 | 5 | 5 | 5 | n.b. | 4 |
| Wasser (dest) 48h | 5 | 5 | 5 | 5 | n.b. | 4 |

| | | | | | | |
|---|---|---|---|---|---|---|
| [1] Beurteilung visuell nach Noten, Note 1 = bestes Resultat, Note 4 = schlechtestes Resultat. Als Benchmark diente eine 100%ige UV Formulierung auf Basis eines aminmodifizierten Polyesteracrylates (Laromer® PO 84F, BASF SE) mit guter Anfeuerung: Note 1). [2] Pendelhärte nach König DIN 53157 (Schwingungen), Messbedingungen: Schichtdicke mind. 200µm relative Luftfeuchtigkeit 40-60 % und Temperatur 20-24 °C [3] Chemikalienbeständigkeit nach DIN EN 12720. Bestimmt wurden: Wasser (24h), | | | | | | |

Kaffee (16h, 6h, 1 h), Ethanol 48%ig in Wasser (6h, 1 h). Note 5 = bestes Resultat, Note 1 = schlechtestes Resultat.

### Anwendungsbeispiel 2

Es wurden Abmischungen der Dispersionen aus Beispiel 1 und Beispiel 4 in den angegebenen Abmischungsverhältnissen hergestellt.

| Abmischungsverhältnis | Anfeuerung auf Buche Parkett | Pendelhärte vor UV Härtung |
|---|---|---|
| 100:0 | 1 | nicht meßbar |
| 90:10 | 1,5 | nicht meßbar |
| 80:20 | 1,5 | 17 |
| 70:30 | 2 | 34 |
| 50:50 | 5 | n.b. |

### Anwendungsbeispiel 3

Es wurden Abmischungen der Dispersionen aus Beispiel 1 und Beispiel 6 in den angegebenen Abmischungsverhältnissen hergestellt.

| Abmischungsverhältnis | Anfeuerung auf Buche Parkett | Pendelhärte vor UV Härtung |
|---|---|---|
| 100:0 | 1 | nicht meßbar |
| 90:10 | 1,5 | nicht meßbar |
| 80:20 | 1,5 | 17 |
| 70:30 | 2 | 41 |
| 50:50 | 5 | n.b. |

### Anwendungsbeispiel 4

Es wurden Abmischungen der Dispersionen aus Beispiel 1 und Beispiel 5 in den angegebenen Abmischungsverhältnissen hergestellt.

| Abmischungsverhältnis | Anfeuerung auf Buche Parkett | Pendelhärte vor UV Härtung |
|---|---|---|
| 100:0 | 1 | nicht meßbar |
| 70:30 | 1 | 17 |
| 65:35 | 2 | 30 |
| 60:40 | 2 | 37 |

## Patentansprüche

1. Beschichtungsmassen, umfassend mindestens zwei strahlungshärtbare, in Wasser dispergierte Polyurethane (A) und (B), von denen Polyurethan (A) aufgebaut ist aus (Aa) wenigstens einem aliphatischen Di- oder Polyisocyanat,
(Ab) wenigstens einer Verbindung mit mindestens einer gegenüber Isocyanatgruppen reaktiven Gruppe und mindestens einer radikalisch polymerisierbaren C=C-Doppelbindung,
(Ac) optional wenigstens einer Verbindung mit mindestens zwei gegenüber Isocyanatgruppen reaktiven Gruppen, die ausgewählt sind unter Hydroxyl-, Mercapto-, primären und/oder sekundären Aminogruppen,
(Ad) wenigstens einer Verbindung mit mindestens einer gegenüber Isocyanatgruppen reaktiven Gruppe und mindestens einer Säuregruppe,
(Ae) mindestens einer basischen Verbindung für eine Neutralisation oder Teilneutralisation der Säuregruppen der Verbindungen Ad),
(Af) optional wenigstens einer von Ab), Ad) und Ae) verschiedenen Verbindung, die nur eine gegenüber Isocyanatgruppen reaktive Gruppe aufweist,
(Ag) optional wenigstens einem von Aa) verschiedenen Di- oder Polyisocyanat,
und das Polyurethan (B) aufgebaut ist aus
(Ba) wenigstens einem cycloaliphatischen oder aromatischen Di- oder Polyisocyanat,
(Bb) wenigstens einer Verbindung mit mindestens einer gegenüber Isocyanatgruppen reaktiven Gruppe und mindestens einer radikalisch polymerisierbaren C=C-Doppelbindung,
(Bc) optional wenigstens einer Verbindung mit mindestens zwei gegenüber Isocyanatgruppen reaktiven Gruppen, die ausgewählt sind unter Hydroxyl-, Mercapto-, primären und/oder sekundären Aminogruppen,
(Bd) wenigstens einer Verbindung mit mindestens einer gegenüber Isocyanatgruppen reaktiven Gruppe und mindestens einer Säuregruppe,
(Be) mindestens einer basischen Verbindung für eine Neutralisation oder Teilneutralisation der Säuregruppen der Verbindungen Bd),
(Bf) optional wenigstens einer von Bb), Bd) und Be) verschiedenen Verbindung, die nur eine gegenüber Isocyanatgruppen reaktive Gruppe aufweist,
(Bg) optional wenigstens einem von Ba) verschiedenen aliphatischen Di- oder Polyisocyanat,
(C optional weiteren Zusatzstoffen, die ausgewählt sind unter Reaktivverdünnern, Photoinitiatoren und üblichen Lackzusatzstoffen,
(D) Wasser sowie
(E) optional mindestens ein Di- und/oder Polyamin,
wobei das Polyurethan (B) für sich allein nach Trocknung über einen Zeitraum von 16 bis 24, bevorzugt 24 Stunden bei einer Nassschichtdicke von 200 µm, einer Temperatur von 20 bis 24 °C und einer relativen Luftfeuchtigkeit von 40 bis 60% und vor UV-Härtung eine Pendeldämpfung gemäß DIN 53157 von mindestens 50 Schwingungen aufweist und wobei das Mischungsverhältnis von Polyurethan (A) und Polyurethan (B) so gewählt ist, daß deren Mischung nach Trocknung über einen Zeitraum von 16 bis 24, bevorzugt 24 Stunden bei einer Nassschichtdicke von 200 µm, einer Temperatur von 20 bis 24 °C und einer relativen Luftfeuchtigkeit von 40 bis 60%und vor UV-Härtung eine Pendeldämpfung gemäß DIN 53157 von mindestens 5, bevorzugt mindestens 20 Schwingungen aufweist.

2. Beschichtungsmassen, umfassend mindestens zwei strahlungshärtbare, in Wasser dispergierte Polyurethane (A) und (B) wie beschrieben in Anspruch 1, worin Polyurethan (A) nach Trocknung und vor Härtung eine Glasübergangstemperatur Tg (extrapolierte Onset Temperatur, T_{eig}) mit der DSC-Methode (Differential Scanning Calorimetry) gemäß ASTM 3418/82 mit einer Aufheizrate von 10 °C/min bestimmt, von weniger als 10 °C aufweist.

3. Beschichtungsmassen gemäß Anspruch 2, worin Polyurethan (B) nach Trocknung und vor Härtung eine Glasübergangstemperatur Tg (extrapolierte Onset Temperatur, T_{eig}) mit der DSC-Methode (Differential Scanning Calorimetry) gemäß ASTM 3418/82 mit einer Aufheizrate von 10 °C/min bestimmt, von mehr als 10 °C aufweist.

4. Beschichtungsmassen gemäß Anspruch 2 oder 3, worin das Mischungsverhältnis von Polyurethan (A) und Polyurethan (B) von 20:80 bis 80:20, bezogen auf das Gewicht, beträgt.

5. Beschichtungsmassen gemäß einem der vorstehenden Ansprüche, worin das Polyurethan (A) eine Aufbaukomponente Aa) enthält, bei der es sich um mindestens ein Isocyanurat-, Uretdion- und/oder Allophanatgruppen haltiges Oligomer auf Basis 1,6-Hexamethylendiisocyanat handelt.

6. Beschichtungsmassen gemäß einem der vorstehenden Ansprüche, worin das Polyurethan (A) eine Aufbaukomponente Aa) der folgenden Formel 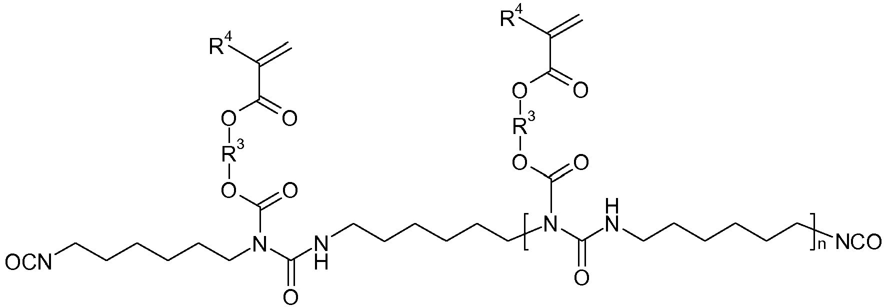 enthält, worin
R³ einen zweiwertigen aliphatischen oder cycloaliphatischen Rest, der 2 bis 12 Kohlenstoffatome aufweist,
R⁴ Wasserstoff oder Methyl und
n im statistischen Mittel 0 oder eine positive Zahl annehmen kann.

7. Beschichtungsmassen gemäß einem der vorstehenden Ansprüche, worin das Polyurethan (B) eine Aufbaukomponente Ba) enthält, bei der es sich es sich um mindestens ein cycloaliphatisches Di- oder Polyisocyanat handelt.

8. Beschichtungsmassen gemäß einem der vorstehenden Ansprüche, worin das Polyurethan (B) eine Aufbaukomponente Ba) enthält, bei der es sich es sich um Isophorondiisocyanat, 4,4'- oder 2,4'-Di(isocyanatocyclohexyl)methan oder deren Isocyanurate handelt.

9. Beschichtungsmassen gemäß einem der vorstehenden Ansprüche, worin das Polyurethan (B) eine Aufbaukomponente Bc) enthält, bei der es sich um ein cycloaliphatisches Diol und/oder ein aliphatisches Diol handelt, bei dem die beiden Hydroxygruppen durch nicht mehr als vier Kohlenstoffatome voneinander getrennt sind.

10. Beschichtungsmassen gemäß einem der vorstehenden Ansprüche, worin das Polyurethan (B) eine Aufbaukomponente Bc) enthält, ausgewählt aus der Gruppe bestehend aus Ethylenglykol, 1,2-Propandiol, 1,3-Propandiol, 1,1-Dimethylethan-1,2-diol, 2-Butyl-2-ethyl-1,3-Propandiol, 2-Ethyl-1,3-Propandiol, 2-Methyl-1,3-Propandiol, Neopentylglykol, 1,2-, 1,3- oder 1,4-Butandiol, Bis-(4-hydroxycyclohexan)isopropyliden, Tetramethylcyclobutandiol, 1,2-, 1,3- oder 1,4-Cyclohexandiol, Cyclooctandiol, Norbornandiol, Pinandiol, Decalindiol, 2,2-Bis(4-hydroxycyclohexyl)propan, 1,1-, 1,2-, 1,3- und 1,4-Cyclohexandimethanol, 1,2-, 1,3- und 1,4-Cyclohexandiol.

11. Beschichtungsmassen gemäß einem der vorstehenden Ansprüche, **dadurch gekennzeichnet, daß** Komponente Ab) und/oder Bb) ausgewählt ist unter 2-Hydroxyethylacrylat, 2-Hydroxy-ethylmethacrylat, 2-Hydroxypropylacrylat, 2-Hydroxypropyl-methacrylat, 3-Hydroxy-butylacrylat, 3-Hydroxybutylmethacrylat, 4-Hydroxybutylacrylat, 4-Hydroxybutylmeth-acrylat, 6-Hydroxyhexylacrylat, 6-Hydroxyhexylmethacrylat, 3-Hy-droxy-2-ethylhexylacrylat, 3-Hydroxy-2-ethylhexylmethacrylat, Trimethylolpropanmono- oder-diacrylat, Pentaerythritdi- oder -triacrylat und Mischungen davon.

12. Beschichtungsmassen gemäß einem der vorstehenden Ansprüche, **dadurch gekennzeichnet, daß** die Komponente Ad) und Bd) ausgewählt ist aus der Gruppe bestehend aus Dimethylolpropionsäure und Dimethylolbuttersäure.

13. Beschichtungsmassen gemäß einem der vorstehenden Ansprüche, **dadurch gekennzeichnet, daß** das Verhältnis der mittleren Durchmesser (z-Mittelwert) der Teilchen des Polyurethans (A) zu den der Teilchen des Polyurethans (B) von 1:2 bis 1:5 beträgt.

14. Verfahren zum Beschichten von Substraten, **dadurch gekennzeichnet, daß** man eine Beschichtungsmasse gemäß einem der vorstehenden Ansprüche auf ein Substrat aufbringt, anschließend trocknet und strahlungshärtet.

15. Verfahren gemäß Anspruch 14, **dadurch gekennzeichnet, daß** das Substrat ausgewählt ist aus der Gruppe bestehend aus Eiche, Fichte, Kiefer, Buche, Ahorn, Kastanie, Platane, Rubinie, Esche, Birke, Pinie, Ulme, Nußbaum und Macore.

16. Verwendung von Beschichtungsmassen gemäß einem der Ansprüche 1 bis 13 zur Beschichtung von Holz, Papier, Textil, Leder, Vlies, Kunststoffoberflächen, Glas, Keramik, mineralischen Baustoffen, Metallen, beschichteten Metallen, Papier, Pappe oder Karton.

## Claims

1. A coating material comprising at least two radiation-curable polyurethanes (A) and (B) in dispersion in water, polyurethane (A) having been synthesized from
(Aa) at least one aliphatic di- or polyisocyanate,
(Ab) at least one compound having at least one group that is reactive toward isocyanate groups, and having at least one radically polymerizable C=C double bond,
(Ac) optionally at least one compound having at least two groups that are reactive toward isocyanate groups and are selected from hydroxyl, mercapto, and primary and/or secondary amino groups,
(Ad) at least one compound having at least one group that is reactive toward isocyanate groups, and having at least one acid group,
(Ae) at least one basic compound for full or partial neutralization of the acid groups of the compounds Ad),
(Af) optionally at least one compound different from Ab), Ad), and Ae) and having only one group that is reactive toward isocyanate groups,
(Ag) optionally at least one di- or polyisocyanate other than Aa),
and the polyurethane (B) having been synthesized from
(Ba) at least one cycloaliphatic or aromatic di-or polyisocyanate,
(Bb) at least one compound having at least one group that is reactive toward isocyanate groups, and having at least one radically polymerizable C=C double bond,
(Bc) optionally at least one compound having at least two groups that are reactive toward isocyanate groups and are selected from hydroxyl, mercapto, and primary and/or secondary amino groups,
(Bd) at least one compound having at least one group that is reactive toward isocyanate groups, and having at least one acid group,
(Be) at least one basic compound for full or partial neutralization of the acid groups of the compounds Bd),
(Bf) optionally at least one compound different from Bb), Bd), and Be) and having only one group that is reactive toward isocyanate groups,
(Bg) optionally at least one aliphatic di- or polyisocyanate other than Ba),
(C) optionally further adjuvants selected from reactive diluents, photoinitiators, and customary coatings adjuvants,
(D) water, and
(E) optionally at least one di- and/or polyamine,
the polyurethane (B) on its own after drying over a period of 16 to 24, preferably 24, hours at a wet film thickness of 200 µm, a temperature of 20 to 24°C, and a relative humidity of 40% to 60%, and before UV curing, having a pendulum damping to DIN 53157 of at least 50 swings, and the mixing ratio of polyurethane (A) and polyurethane (B) being selected such that the mixture thereof after drying over a period of 16 to 24, preferably 24, hours at a wet film thickness of 200 µm, a temperature of 20 to 24°C, and a relative humidity of 40% to 60%, and before UV curing, has a pendulum damping to DIN 53157 of at least 5, preferably at least 20, swings.

2. The coating material comprising at least two radiation-curable polyurethanes (A) and (B) in dispersion in water as described in claim 1, in which polyurethane (A) after drying and before curing has a glass transition temperature Tg (extrapolated on set temperature, T_{eig}), as determined by the DSC (Differential Scanning Calorimetry) method in accordance with ASTM 3418/82 with a heating rate of 10°C/min, of less than 10°C.

3. The coating material according to claim 2, in which polyurethane (B) after drying and before curing has a glass transition temperature Tg (extrapolated onset temperature, T_{eig}), as determined by the DSC (Differential Scanning Calorimetry) method in accordance with ASTM 3418/82 with a heating rate of 10°C/min, of more than 10°C.

4. The coating material according to claim 2 or 3, in which the mixing ratio of polyurethane (A) and polyurethane (B) is from 20:80 to 80:20, based on the weight.

5. The coating material according to any of the preceding claims, in which the polyurethane (A) comprises a synthesis component Aa) which is at least one oligomer containing isocyanurate, uretdione and/or allophanate groups and based on 1,6-hexamethylene diisocyanate.

6. The coating material according to any of the preceding claims, in which the polyurethane (A) comprises a synthesis component Aa) of the following formula 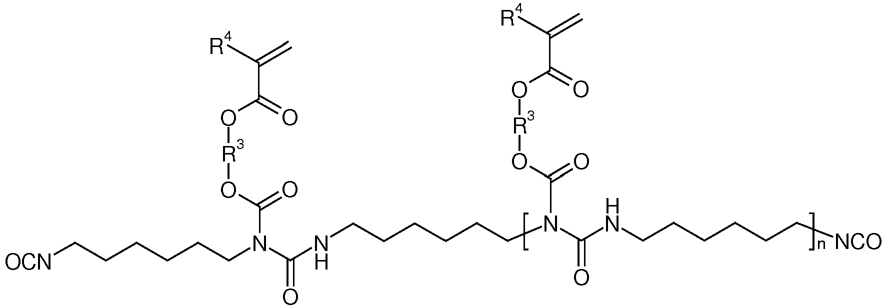 in which R³ is a divalent aliphatic or cycloaliphatic radical having 2 to 12 carbon atoms, R⁴ is hydrogen or methyl, and n may adopt on average 0 or a positive number.

7. The coating material according to any of the preceding claims, in which the polyurethane (B) comprises a synthesis component Ba) which is at least one cycloaliphatic di- or polyisocyanate.

8. The coating material according to any of the preceding claims, in which the polyurethane (B) comprises a synthesis component Ba) which is isophorone diisocyanate, 4,4'- or 2,4'-di(isocyanatocyclohexyl)methane, or their isocyanurates.

9. The coating material according to any of the preceding claims, in which the polyurethane (B) comprises a synthesis component Bc) which is a cycloaliphatic diol and/or an aliphatic diol in which the two hydroxyl groups are separated from one another by not more than four carbon atoms.

10. The coating material according to any of the preceding claims, in which the polyurethane (B) comprises a synthesis component Bc) selected from the group consisting of ethylene glycol, 1,2-propanediol, 1,3-propanediol, 1,1-dimethylethane-1,2-diol, 2-butyl-2-ethyl-1,3-propanediol, 2-ethyl-1,3-propanediol, 2-methyl-1,3-propanediol, neopentyl glycol, 1,2-, 1,3-, or 1,4-butanediol, bis(4-hydroxycyclohexane)isopropylidene, tetramethylcyclobutanediol, 1,2-, 1,3-, or 1,4-cyclohexanediol, cyclooctanediol, norbornanediol, pinanediol, decalindiol, 2,2-bis(4-hydroxycyclohexyl)propane, 1,1-, 1,2-, 1,3-, and 1,4-cyclohexanedimethanol, 1,2-, 1,3-, and 1,4-cyclohexanediol.

11. The coating material according to any of the preceding claims, wherein component Ab) and/or Bb) are/is selected from 2-hydroxyethyl acrylate, 2-hydroxyethyl methacrylate, 2-hydroxypropyl acrylate, 2-hydroxypropyl methacrylate, 3-hydroxybutyl acrylate, 3-hydroxybutyl methacrylate, 4-hydroxybutyl acrylate, 4-hydroxybutyl methacrylate, 6-hydroxyhexyl acrylate, 6-hydroxyhexyl methacrylate, 3-hydroxy-2-ethylhexyl acrylate, 3-hydroxy-2-ethylhexyl methacrylate, trimethylolpropane mono- or diacrylate, pentaerythritol di- or triacrylate, and mixtures thereof.

12. The coating material according to any of the preceding claims, wherein components Ad) and Bd) are selected from the group consisting of dimethylolpropionic acid and dimethylolbutyric acid.

13. The coating material according to any of the preceding claims, wherein the ratio of the average diameter (z-average) of the particles of the polyurethane (A) to that of the particles of the polyurethane (B) is from 1:2 to 1:5.

14. A method for coating a substrate, wherein a coating material according to any of the preceding claims is applied to a substrate and is subsequently dried and radiation-cured.

15. The method according to claim 14, wherein the substrate is selected from the group consisting of oak, spruce, pine, beech, maple, chestnut, plane, robinia, ash, birch, pine, elm, walnut, and macore.

16. The use of a coating material according to any of claims 1 to 13, to coat wood, paper, textile, leather, nonwoven, plastics surfaces, glass, ceramic, mineral building materials, metals, coated metals, paper, paperboard, or cardboard.

## Revendications

1. Masses de revêtement, comprenant au moins deux polyuréthanes (A) et (B) durcissables par un rayonnement, dispersés dans l'eau, parmi lesquels le polyuréthane (A) est constitué par
(Aa) au moins un diisocyanate ou polyisocyanate aliphatique,
(Ab) au moins un composé présentant au moins un groupe réactif par rapport aux groupes isocyanate et au moins une double liaison C=C polymérisable par voie radicalaire et
(Ac) éventuellement au moins un composé présentant au moins deux groupes réactifs par rapport aux groupes isocyanate, qui sont choisis parmi les groupes hydroxyle, mercapto, amino primaire et/ou secondaire,
(Ad) au moins un composé présentant au moins un groupe réactif par rapport aux groupes isocyanate et au moins un groupe acide,
(Ae) au moins un composé basique pour une neutralisation ou une neutralisation partielle des groupes acides des composés Ad),
(Af) éventuellement au moins un composé différent de Ab), de Ad) et de Ae), qui ne présente qu'un groupe réactif par rapport aux groupes isocyanate,
(Ag) éventuellement au moins un diisocyanate ou polyisocyanate différent de Aa),
et le polyuréthane (B) est constitué par
(Ba) au moins un diisocyanate ou polyisocyanate cycloaliphatique ou aromatique,
(Bb) au moins un composé présentant au moins un groupe réactif par rapport aux groupes isocyanate et au moins une double liaison C=C polymérisable par voie radicalaire et
(Bc) éventuellement au moins un composé présentant au moins deux groupes réactifs par rapport aux groupes isocyanate, qui sont choisis parmi les groupes hydroxyle, mercapto, amino primaire et/ou secondaire,
(Bd) au moins un composé présentant au moins un groupe réactif par rapport aux groupes isocyanate et au moins un groupe acide,
(Be) au moins un composé basique pour une neutralisation ou une neutralisation partielle des groupes acides des composés Bd),
(Bf) éventuellement au moins un composé différent de Bb), de Bd) et de Be), qui ne présente qu'un groupe réactif par rapport aux groupes isocyanate,
(Bg) éventuellement au moins un diisocyanate ou polyisocyanate aliphatique différent de Ba),
(C) éventuellement d'autres additifs qui sont choisis parmi les diluants réactifs, les photo-initiateurs et les additifs usuels pour laque,
(D) de l'eau ainsi que
(E) éventuellement au moins une diamine et/ou polyamine, le polyuréthane (B) présentant, en soi, après un séchage pendant une période de 16 à 24, de préférence pendant 24 heures, à une épaisseur de couche humide de 200 µm, à une température de 20 à 24°C et à une humidité relative de l'air de 40 à 60% et avant le durcissement aux UV, un amortissement du pendule selon la norme DIN 53157 d'au moins 50 oscillations et le rapport de mélange du polyuréthane (A) et du polyuréthane (B) étant choisi de manière telle que leur mélange présente, après séchage pendant une période de 16 à 24, de préférence pendant 24 heures, à une épaisseur de couche humide de 200 µm, à une température de 20 à 24°C et à une humidité relative de 40 à 60% et avant le durcissement aux UV, un amortissement du pendule selon la norme 53157 d'au moins 5, de préférence d'au moins 20 oscillations.

2. Masses de revêtement, comprenant au moins deux polyuréthanes (A) et (B) durcissables par un rayonnement, dispersés dans de l'eau, tels que décrits dans la revendication 1, le polyuréthane (A) présentant, après séchage et avant durcissement, une température de transition vitreuse Tg (température de démarrage extrapolée, T_{eig}), déterminée par le procédé par DSC (calorimétrie à balayage différentiel) selon la norme ASTM 3418/82 à une vitesse de chauffage de 10°C/min, inférieure à 10°C.

3. Masses de revêtement selon la revendication 2, le polyuréthane (B) présentant, après séchage et avant durcissement, une température de transition vitreuse Tg (température de démarrage extrapolée, T_{eig}), déterminée par le procédé par DSC (calorimétrie à balayage différentiel) selon la norme ASTM 3418/82 à une vitesse de chauffage 10°C/min, supérieure à 10°C.

4. Masses de revêtement selon la revendication 2 ou 3, dans lesquelles le rapport de mélange du polyuréthane (A) et du polyuréthane (B) est de 20:80 à 80:20, par rapport au poids.

5. Masses de revêtement selon l'une quelconque des revendications précédentes, dans lesquelles le polyuréthane (A) contient un composant constitutif Aa), pour lequel il s'agit d'au moins un oligomère contenant des groupes isocyanurate, uretdione et/ou allophanate à base de diisocyanate de 1,6-hexaméthylène.

6. Masses de revêtement selon l'une quelconque des revendications précédentes, dans lesquelles le polyuréthane (A) contient un composant constitutif Aa) de la formule suivante 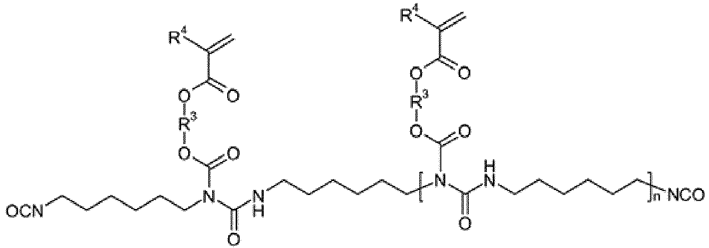 dans laquelle
R³ représente un radical aliphatique ou cycloaliphatique divalent qui présente 2 à 12 atomes de carbone,
R⁴ représente hydrogène ou méthyle et
n peut valoir, en moyenne statistique, 0 ou un nombre positif.

7. Masses de revêtement selon l'une quelconque des revendications précédentes, dans lesquelles le polyuréthane (B) contient un composant constitutif Ba) pour lequel il s'agit d'au moins un diisocyanate ou polyisocyanate cycloaliphatique.

8. Masses de revêtement selon l'une quelconque des revendications précédentes, dans lesquelles le polyuréthane (B) contient un composant constitutif Ba) pour lequel il s'agit de diisocyanate d'isophorone, de 4,4'-di(isocyanatocyclohexyl)méthane ou de 2,4'-di(isocyanatocyclohexyl)méthane ou de leurs isocyanurates.

9. Masses de revêtement selon l'une quelconque des revendications précédentes, dans lesquelles le polyuréthane (B) contient un composant constitutif Bc) pour lequel il s'agit d'un diol cycloaliphatique et/ou d'un diol aliphatique, dans le(s)quel(s) les deux groupes hydroxy sont séparés l'un de l'autre par pas plus de quatre atomes de carbone.

10. Masses de revêtement selon l'une quelconque des revendications précédentes, dans lesquelles le polyuréthane (B) contient un composant constitutif Bc), choisi dans le groupe constitué par l'éthylèneglycol, le 1,2-propanediol, le 1,3-propanediol, le 1,1-diméthyléthane-1,2-diol, le 2-butyl-2-éthyl-1,3-propanediol, le 2-éthyl-1,3-propanediol, le 2-méthyl-1,3-propanediol, le néopentylglycol, le 1,2-butanediol, le 1,3-butanediol ou le 1,4-butanediol, le bis-(4-hydroxycyclohexane)-isopropylidène, le tétraméthylcyclobutanediol, le 1,2-cyclohexanediol, le 1,3-cyclohexanediol ou le 1,4-cyclohexanediol, le cyclooctanediol, le norbornanediol, le pinanediol, le décalinediol, le 2,2-bis(4-hydroxycyclohexyl)propane, le 1,1-cyclohexanediméthanol, le 1,2-cyclohexanediméthanol, le 1,3-cyclohexanediméthanol et le 1,4-cyclohexanediméthanol, le 1,2-cyclohexanediol, le 1,3-cyclohexanediol et le 1,4-cyclohexanediol.

11. Masses de revêtement selon l'une quelconque des revendications précédentes, **caractérisées en ce que** le composant Ab) et/ou Bb) est choisi parmi l'acrylate de 2-hydroxyéthyle, le méthacrylate de 2-hydroxyéthyle, l'acrylate de 2-hydroxypropyle, le méthacrylate de 2-hydroxypropyle, l'acrylate de 3-hydroxybutyle, le méthacrylate de 3-hydroxybutyle, l'acrylate de 4-hydroxybutyle, le méthacrylate de 4-hydroxybutyle, l'acrylate de 6-hydroxyhexyle, le méthacrylate de 6-hydroxyhexyle, l'acrylate de 3-hydroxy-2-éthylhexyle, le méthacrylate de 3-hydroxy-2-éthylhexyle, le monoacrylate ou le diacrylate de triméthylolpropane, le diacrylate ou le triacrylate de pentaérythritol et leurs mélanges.

12. Masses de revêtement selon l'une quelconque des revendications précédentes, **caractérisées en ce que** les composants Ad) et Bd) sont choisis dans le groupe constitué par l'acide diméthylolpropionique et l'acide diméthylolbutyrique.

13. Masses de revêtement selon l'une quelconque des revendications précédentes, **caractérisées en ce que** le rapport du diamètre moyen (valeur moyenne z) des particules du polyuréthane (A) à celui des particules du polyuréthane (B) vaut 1:2 à 1:5.

14. Procédé pour le revêtement de substrats, **caractérisé en ce qu'**on applique une masse de revêtement selon l'une quelconque des revendications précédentes sur un substrat, on la sèche ensuite et on la durcit par un rayonnement.

15. Procédé selon la revendication 14, **caractérisé en ce que** le substrat est choisi dans le groupe constitué par le chêne, l'épicéa, le pin, le hêtre, l'érable, le marronnier, le platane, le robinier, le frêne, le bouleau, le pin parasol, l'orme, le noyer et le makoré.

16. Utilisation de masses de revêtement selon l'une quelconque des revendications 1 à 13 pour le revêtement de bois, de papier, de textile, de cuir, de non-tissé, de surfaces en matériau synthétique, de verre, de céramique, de matériaux de construction minéraux, de métaux, de métaux revêtus, de papier, de carton-pâte ou de carton.
